(19)

Europäisches Patentamt
European Patent Office
Office européen des brevets

(11) **EP 2 136 566 A1**

(12) **EUROPEAN PATENT APPLICATION**
published in accordance with Art. 153(4) EPC

(43) Date of publication:
**23.12.2009 Bulletin 2009/52**

(51) Int Cl.:
***H04N 7/50*** *(2006.01)*

(21) Application number: **08722402.8**

(22) Date of filing: **18.03.2008**

(86) International application number:
**PCT/JP2008/055012**

(87) International publication number:
**WO 2008/132890 (06.11.2008 Gazette 2008/45)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **16.04.2007 JP 2007106899**

(71) Applicant: **Kabushiki Kaisha Toshiba Minato-ku, Tokyo 105-8001 (JP)**

(72) Inventors:
• **TANIZAWA, Akiyuki Tokyo 105-8001 (JP)**
• **CHUJOH, Takeshi Tokyo 105-8001 (JP)**

(74) Representative: **Delumeau, François Guy et al Cabinet Beau de Loménie 158, rue de l'Université 75340 Paris Cedex 07 (FR)**

(54) **IMAGE ENCODING AND IMAGE DECODING METHOD AND DEVICE**

(57)    A video encoding apparatus includes a predictor to perform prediction for an input image signal to generate a prediction image signal, a subtractor to calculate a difference between the input image signal and the prediction image signal to generate a prediction residual signal, a transformer to transform the prediction residual signal to generate a transform coefficient, a modulating unit to perform modulation on a quantization matrix to obtain a modulated quantization matrix, a quantizer to quantize the transform coefficient using the modulated quantization matrix to generate a quantized transform coefficient, and an encoder to encode the quantized transform coefficient and a modulation index to generate encoded data.

FIG. 1

EP 2 136 566 A1

**Description**

Technical Field

The present invention relates to a video encoding and decoding method and apparatus for a motion video or a still video.

Background Art

In recent years, a video encoding method in which encoding efficiency is greatly improved has been recommended as ITU-T Rec. H. 264 and ISO/IEC 14496-10 (hereinafter, referred to as H.264) in conjunction with ITU-T and ISO/IEC. Encoding methods, such as ISO/IEC MPEG-1, 2 and 4, and ITU-T H. 261 and H.263, perform compression using a two-dimensional DCT of $8 \times 8$ blocks. Meanwhile, since a two-dimensional integer orthogonal transform of $4 \times 4$ blocks is used in the H.264, an IDCT mismatch does not need to be considered, and an operation using a 16-bait register is enabled.

Further, in an H.264 high profile, a quantization matrix is introduced for a quantization process of orthogonal transform coefficients, as one tool for subjective image duality improvement for a high-definition image like an HDTV size (refer to J. Lu, "proposal of quantization weighting for H.264/MPEG-4 AVC Professional Profiles", JVT of ISO/IEC MPEG & ITU-T VCEG, JVT-K 029, March. 2004(Document 1)). The quantization matrix is a tool that uses a visual characteristic of the human being to perform weighting on quantization coefficients in a frequency domain so as to improve a subjective image quality, and is also used in ISO/IEC MPEG-2,4. The quantization matrix that is used in H. 264 can be switched in units of a sequence, picture or slice, but cannot be changed in units of a smaller process block.

Meanwhile, a technique for enabling a quantization matrix to be switched in units of a macroblock is suggested in JP-A 2006-262004 (KOKAI). However, according to the technique suggested in JP-A 2006-262004, it is only possible to switch whether or not to use the quantization matrix, and optimization of a quantization process that considers locality of a to-be-encoded image is not possible.

A method for changing a quantization matrix using a variation in the number of encoded bits from a previous picture in order to control the number of encoded bits is suggested in JP-A 2003-189308 (KOKAI). However, even in JP-A 2003-189308, similar to Document 1, optimization of a quantization process in units of a quantization block is not possible.

Disclosure of Invention

An object of the present invention is to enable optimization of a quantization process using locality of an image when a motion video or a still video is encoded, thereby realizing high encoding efficiency.

According to an aspect of the present invention, there is provided performing prediction for an input image signal to generate a prediction image signal; calculating a difference between the input image signal and the prediction image signal to generate a prediction residual signal; transforming the prediction residual signal to generate a transform coefficient; performing modulation on any one of (a) a quantization matrix, (b) a control parameter for controlling operation precision for quantization, (c) a quantization parameter indicating roughness of the quantization, and (d) a table in which a quantization scale is associated with the quantization parameter indicating roughness of the quantization, to obtain a modulation result related to the quantization; quantizing the transform coefficient using the modulation result to generate a quantized transform coefficient; and encoding the quantized transform coefficient and an index related to the modulation to generate encoding data.

According to another aspect of the present invention, there is provided a video decoding method comprising: decoding encoded data including a quantization transform coefficient and an index related to modulation; performing modulation on any one of (a) a quantization matrix, (b) a control parameter for controlling operation precision for quantization, (c) a quantization parameter indicating roughness of the quantization, and (d) a table wherein a quantization scale is associated with the quantization parameter indicating roughness of the quantization in accordance with the index, to obtain a modulation result related to the quantization; inversely quantizing the quantization transform coefficient using the modulation result to generate an inverse quantized transform coefficient; performing inverse transform on the inverse quantized transform coefficient to generate a prediction residual signal; performing prediction using a decoding image signal to generate a prediction image signal; and adding the prediction image signal and the prediction residual signal to generate a decoded image signal.

Brief Description of Drawings

FIG. 1 is a block diagram illustrating a video encoding apparatus according to a first embodiment.

FIG. 2 is a diagram illustrating an encoding sequence in an encoding frame.

TIG. 3 is a diagram illustrating a quantization block size.

FIG. 4A is a diagram illustrating a $4 \times 4$ pixel block.

FIG. 4B is a diagram illustrating an $8 \times 8$ pixel block.

FIG. 5A is a diagram illustrating a frequency place of a $4 \times 4$ pixel block.

FIG. 5B is a diagram illustrating a frequency place of an $8 \times 8$ pixel block.

FIG. 6 is a block diagram illustrating a quantization matrix modulating unit of FIG. 1.

FIG. 7 is a block diagram illustrating a modulation matrix setting unit of FIG. 6.

FIG. 8 is a diagram illustrating an example of a modulation model of a modulation matrix.

FIG. 9 is a diagram illustrating another example of a modulation model of a modulation matrix.

FIG. 10 is a block diagram illustrating a modulation quantization matrix generating unit of FIG. 6.

FIG. 11A is a diagram illustrating a slice quantization matrix of an encoding slice.

FIG. 11B is a diagram illustrating a block quantization matrix of an encoding slice.

FIG. 11C is a diagram illustrating a relationship between a block quantization matrix and a modulation matrix and a modulation quantization matrix.

FIG. 11D is a diagram illustrating a modulation quantization matrix of an encoding slice.

FIG. 12 is a flowchart illustrating a sequence of an encoding process in the first embodiment.

FIG. 13 is a diagram schematically illustrating a syntax structure in the first embodiment.

FIG. 14 is a diagram illustrating an example of a data structure of sequence parameter set syntax in the first embodiment.

FIG. 15 is a diagram illustrating an example of a data structure of picture parameter set syntax in the first embodiment.

FIG. 16 is a diagram illustrating an example of a data structure of slice header syntax in the first embodiment.

FIG. 17 is a diagram illustrating an example of a data structure of macroblock header syntax in the first embodiment.

FIG. 18 is a diagram illustrating an example of a data structure of macroblock header syntax in the first embodiment.

FIG. 19 is a diagram illustrating an example of a data structure of slice header syntax in the first embodiment.

FIG. 20 is a diagram illustrating semantics of a syntax element in the first embodiment.

FIG. 21 is a block diagram illustrating a video encoding apparatus according to a second embodiment.

FIG. 22 is a block diagram illustrating a video encoding apparatus according to a third embodiment.

FIG. 23 is a block diagram illustrating a video encoding apparatus according to a fourth embodiment.

FIG. 24 is a diagram illustrating a relationship between a precision modulation index and a quantization parameter variation value and a quantization scale variation value in the fourth embodiment.

FIG. 25 is a diagram illustrating an example of a data structure of sequence parameter set syntax in the fourth embodiment.

FIG. 26 is a diagram illustrating an example of a data structure of picture parameter set syntax in the fourth embodiment.

FIG. 27 is a diagram illustrating an example of a data structure of slice header syntax in the fourth embodiment.

FIG. 28 is a diagram illustrating an example of a data structure of macroblock header syntax in the fourth embodiment.

FIG. 29 is a diagram illustrating an example of a data structure of slice header syntax according to an embodiment.

FIG. 30 is a block diagram illustrating a video decoding apparatus according to a fifth embodiment.

FIG. 31 is a block diagram illustrating a video decoding apparatus according to a sixth embodiments.

FIG. 32 is a block diagram illustrating a video decoding apparatus according to a seventh embodiment.

FIG. 33 is a block diagram illustrating a video decoding apparatus according to an eighth embodiment.

Best Mode for Carrying Out the Invention

Hereinafter, preferred embodiments of the present invention will be described with reference to the accompanying drawings.

<Video Encoding Apparatus>

First, first to fourth embodiments that are related to video encoding will be described.

(First Embodiment)

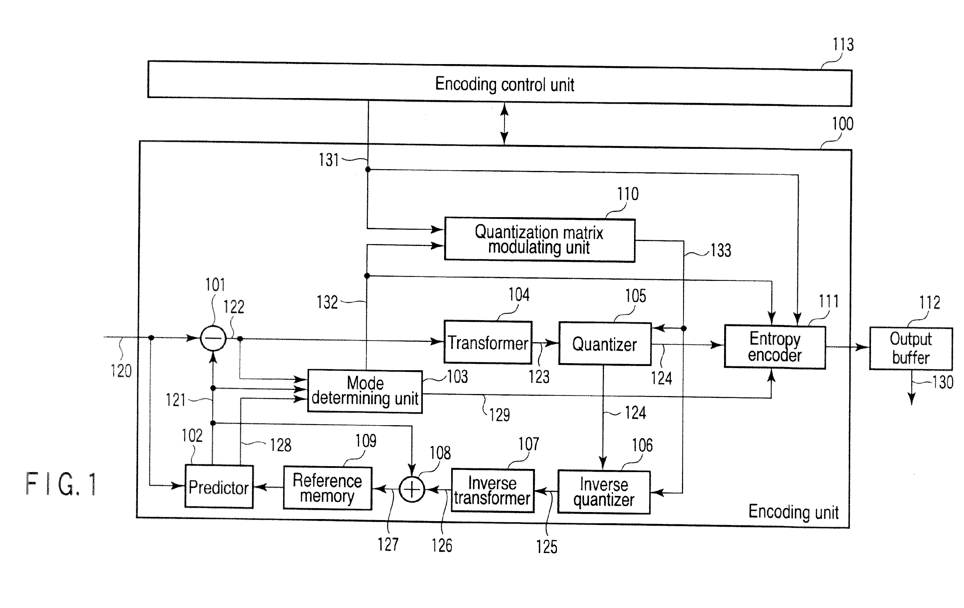

Referring to FIG. 1, in a video encoding apparatus according to the first embodiment of the present invention, an input image signal 120 of a motion video or a still video is divided in units of a small pixel block, for example, in units of a macroblock, and is input to an encoding unit 100. In this case, a macroblock becomes a basic process block size of an encoding process. Hereinafter, a to-be-encoded macroblock of the input image signal 120 is simply referred to as a target block.

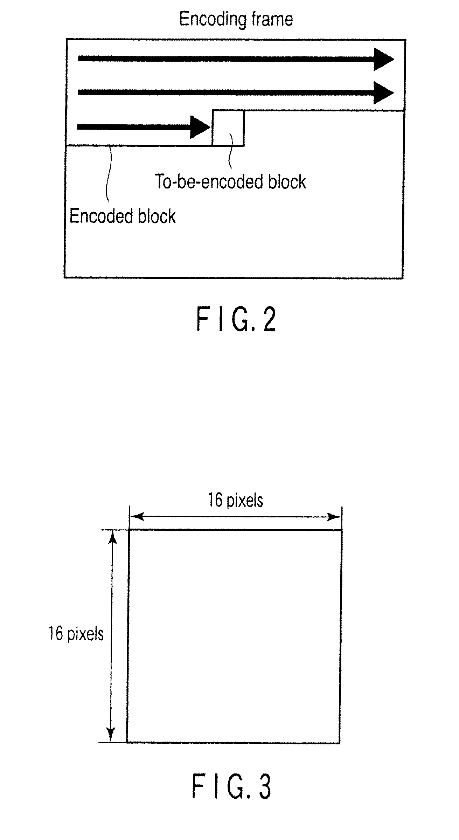

In the encoding unit 100, a plurality of prediction modes in which block sizes or methods of generating a prediction image signal are different from each other are prepared. As the methods of generating the prediction image signal, an intra-frame prediction for generating a prediction image in only a to-be-encoded frame and an inter-frame prediction four performing a prediction using a plurality of temporally different reference frames are generally used. In this embodiment, for the simplicity of description, as illustrated in FIG. 2, it is assumed that an encoding process is performed from an upper left side to a lower right side.

A macroblock is typically a 16 × 16 pixel block as illustrated in FIG. 3. However, the macroblock may be in units of a 32 × 32 pixel block or in units of an 8 × 8 pixel block. Further, a shape of the macroblock is not necessarily a square lattice.

The encoding unit 100 will be described. In a subtractor 101, a difference between the input image signal 120 and a prediction image signal 121 from a predictor 102 is calculated, and a prediction residual signal 122 is generated. The prediction residual signal 122 is input to a mode determining unit 103 and a transformer 104. The mode determining unit 103 will be described in detail below. In the transformer 104, an orthogonal transform, such as a discrete cosine transform (DCT), is performed on the prediction residual signal 122, and transform coefficients 123 are generated. A transform in the transformer 104 may be performed using a method, such as a discrete sine transform, a Wavelet transform, or an independent component analysis.

The transform coefficients 123 output from the transformer 104 are input to a quantizer 105. In the quantizer 105, the transform coefficients 123 are quantized in accordance with a quantization parameter provided by an encoding control unit 113 and a modulation quantization matrix 133 generated by a quantization matrix modulating unit 110, which will be described in detail below, and quantized transform coefficients 124 are generated.

The quantized transform coefficients 124 are input to an inverse quantizer 106 and an entropy encoder 111. The entropy encoder 111 will be described in detail below. In the inverse quantizer 106, inverse quantization is performed on the quantized transform coefficients 124 in accordance with the quantization parameter provided by the encoding control unit 113 and the modulation quantization matrix 133, and an inverse-quantized transform coefficients 125 are generated.

An inverse transformer 107 subjects the inverse-quantized transform coefficients 125 from the inverse quantizer 106 to an inverse transform from the transform of the transformer 104, for example, an inverse orthogonal transform such as an inverse discrete cosine transform (IDCT). By the inverse orthogonal transform, the same signal 126 (referred to as decoding prediction residual signal) as the prediction residual signal 122 is reproduced. The decoding prediction residual signal 126 is input to an adder 108. In the adder 108, the decoding prediction residual signal 126 and the prediction image signal 121 from the predictor 102 are added, and a local decoded signal 127 is generated. The local decoded signal 127 is accumulated as a reference image signal in a reference memory 109. The reference image signal that is accumulated in the reference memory 109 is referred to, when a prediction is performed by the predictor 102.

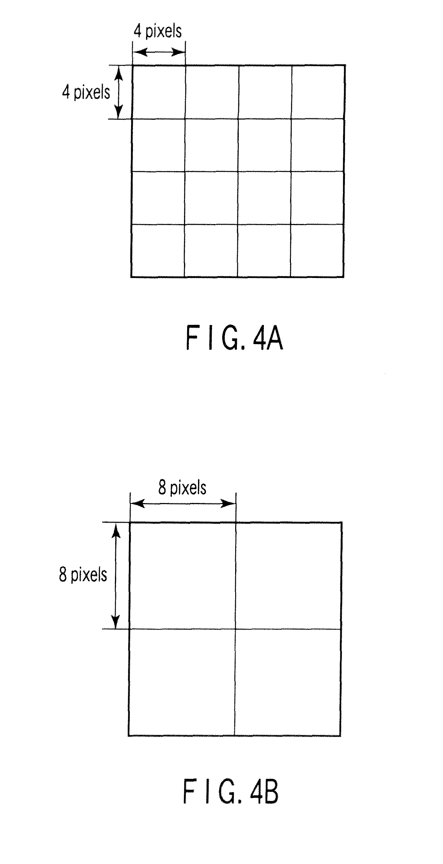

In the predictor 102, an inter-frame prediction or an intra-frame prediction is performed using a pixel (encoded reference pixel) of the reference image signal that is accumulated in the reference memory 107. As a result, all of the prediction image signals 121 that can be selected with respect to a to-be-encoded block by the predictor 102 are generated. However, in regards to a prediction mode in which a next prediction is not possible if a local decoded signal is generated in the to-be-encoded block, such as an intra-frame prediction of H.264, for example, a 4 × 4 pixel block size prediction illustrated in FIG. 4A or an 8 × 8 pixel block size prediction illustrated in FIG. 4B,, transform/quantization and inverse quantization/inverse transform may be performed in the predictor 102.

As an example of the prediction mode in the predictor 102, the inter-frame prediction will be described. When the to-be-encoded block is predicted in the inter-frame prediction, block marching is performed using a plurality of encoded reference pixels that are accumulated in the reference memory 109. In the block matching, a shift amount between the pixel of the target block of the input image signal 120 as an original image and the plurality of reference pixels is calculated. From the predictor 102, among the images that are predicted using the shift amount, an image where a difference from the original image is small is output as the prediction image signal 121. The shift amount is calculated at integer pixel precision or fraction pixel precision, and information indicating the shift amount is added to prediction mode information 129 as motion vector information 128.

The prediction image signal 121 generated by the predictor 102 and the prediction residual signal 122 are input to the mode determining unit 103. In the mode determining unit 103, an optimal prediction mode is selected (which is referred to as a mode determination), on the basis of the input image signal 120, the prediction image signal 121, the prediction residual signal 122, mode information 129 indicating a prediction mode used in the predictor 102, and a modulation index 132 to be described in detail below.

Specifically, the mode determining unit 103 caries out a mode determination using a cost like the following Equation. If the number of encoded bits related to the prediction mode information 129 is OH, the number of encoded bits of the modulation index 132 is INDEX, and a sum of absolute difference between the input image signal 120 and the local decoded signal 127 is SAD, the mode determining unit 103 uses the following mode determination equation.

$$K = SAD + \lambda \times (OH + INDEX) \qquad (1)$$

In this case, K denotes a cost and $\lambda$ denotes an integer. $\lambda$ is determined on the basis of a value of a quantization scale or a quantization parameter. On the basis of the cost K obtained in the above way, the mode determination is carried out. That is, a mode in which the cost K has the smallest value is selected as an optimal prediction mode.

In the mode determining unit 103, the mode determination may be performed using only (a) the prediction mode information 129, (b) the modulation index 132, (c) the SAD or (d) an absolute sum of the prediction residual signal 122 instead of the equation 1, and a value that is obtained by performing an Hadamard transform on any one of (a), (b), (c), and (d) or a value approximated to the value may be used. Further, in the mode determining unit 103, a cost may be created using activity of the input image signal 120 or a cost function may be created using a quantization scale or a quantization parameter.

As another example, a preliminary encoding unit may be prepared, and a mode determination may be carried out using of the number of encoded bits when actually encoding the prediction residual signal 122 generated in any prediction mode and a square error between the input image signal 120 and the local decoded signal 127, by a preliminary encoding unit in the mode determining unit 103. In this case, the mode determining equation is as follows.

$$J = D + \lambda \times R \qquad (2)$$

In this case, J denotes an encoding cost, and D denotes an encoding distortion indicating the square error between the input image signal 120 and the local decoding image 116. Meanwhile, R denotes the number of encoded bits that is estimated by preliminary encoding.

If the encoding cost J of the equation 2 is used, preliminary encoding and local decoding processes are needed for every prediction mode, and thus, a circuit scale or an operation amount is increased. Meanwhile, since the more accurate number of encoded bits and encoding distortion are used, high encoding efficiency can be maintained. A cost may be calculated using only R or D instead of the equation 2, and a cost function may be created using a value obtained by approximating R or D. In the description below, a description is given using the encoding cost J illustrated in the equation 2.

The prediction mode information 129 (including motion vector information) that is output from the mode determining unit 103 is input to an entropy encoder 111. In the entropy encoder 111, with respect to information, such as the quantized transform coefficients 124, the prediction mode information 129, the quantization matrix 131, and the modulation matrix 132, entropy encoding, for example, Huffman encoding or arithmetic encoding is performed, and encoding data is generated.

The encoding data that is generated by the entropy encoder 111 is output from the encoding unit 100, and is temporary stored in an output buffer 112 after multiplexing. The encoding data that is accumulated in the output buffer 112 is output as an encoding bit stream 130 to the outside of a video encoding apparatus, in accordance with output timing managed by the encoding control unit 113. The encoding bit stream 130 is transmitted to a transmission system (communication network) or an accumulation system (accumulation media) not shown.

(With respect to a quantization matrix modulating unit 110)

If the quantization matrix modulating unit 110, with respect to the quantization, matrix 131 that is provided from the encoding control unit 113, a modulation is performed in accordance with the modulation index 132 from the mode determining unit 103, and a modulated quantization matrix 133 is generated. The modulated quantization matrix 133 is provided to the quantizer 105 and the inverse quantizer 106 and used in the quantization and the inverse quantization.

Specifically, the quantization that is performed in the quantizer 105 in accordance with the modulated quantization matrix 133 is represented by the following equation.

$$Y(i,j) = (X(i,j) \times MQM(i,j,idx) + f)/Q_{step} \qquad (3)$$

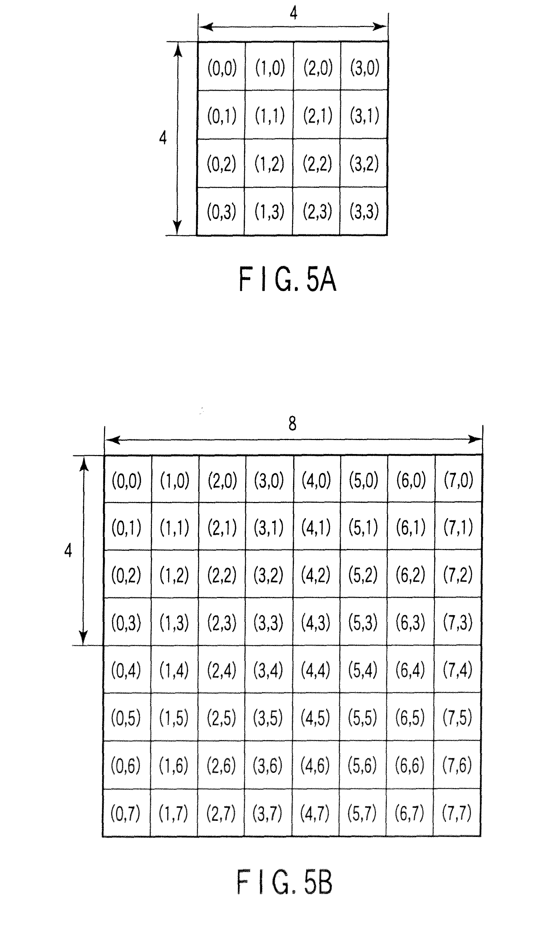

In this case, Y denotes quantized transform coefficients 124, and X denotes transform coefficients 123 before quantization. In addition, f denotes a rounding offset to control roundup/truncation in the quantization, and $Q_{step}$ denotes a quantization scale (called a quantization step size or a quantization width). When a value of $Q_{step}$ is large, quantization is roughly performed, and when the value is small, the quantization is minutely performed. $Q_{step}$ is changed on the basis of a quantization parameter. (i,j) indicates a frequency component position in a quantization block in the quantizer 105 with the xy coordinates. In this case, (i,j) is different depending on whether the quantization block is a $4 \times 4$ pixel block illustrated in Fig. 5A or an $8 \times 8$ pixel block illustrated in FIG. 5B.

In general, a transform block size and a quantization block size are matched with each other. In this embodiment, transform quantization block sizes of a plurality of block sizes exist. The transform quantization block size is set as a different prediction mode, and is determined by the mode determining unit 103 as the different prediction mode.

In the equation 3, MQM denotes a modulation quantization matrix 133, and idx denotes a modulation index 132. The modulation index 132 is an index that is related to a modulation of the quantization matrix 131 that is performed by the quantization matrix modulating unit 110. The modulation index 132 will be described in detail below.

When signs of the transform coefficients 123 are separated, the equation 3 is transformed as follows.

$$Y(i,j) = sign(X(i,j)) \times (abs(X(i,j))$$
$$\times MQM(i,j,jdx) + f)/Q_{step} \qquad (4)$$

In this case, sign(X) is a function that returns a sign of X, and denotes a sign of the conversion coefficients 123. abs(X) is a function that returns an absolute value of X.

In order to simplify an operation, if the quantization scale $Q_{step}$ is designed by a power-of-two, the equation 3 is transformed as follows.

$$Y(i,j) = sign(X(i,j)) \times (abs(X(i,j))$$
$$\times MQM(i,j,idx) + f) >> Q_{bit} \qquad (5)$$

Here, $Q_{bit}$ denotes a quantization scale that is designed by a power-of-two.

In this case, the division can be replaced by the bit shift, and a process amount that is needed in the division can be reduced.

In order to maximally suppress operation precision, the operation precision can be changed for every frequency component. In this case, Equation 3 is transformed as follows.

$$Y(i,j) = sign(X(i,j)) \times (abs(X(i,j))$$
$$\times MQM(i,j,jdx) \times LS(i,j) + f) >> Q_{bit} \quad (6)$$

Here, LS denotes an operation precision control parameter to adjust the operation precision of the quantization process for every frequency component.

That is, LS is used to change an operation scale for every frequency place, when the quantization process is performed, and is called LevelScale or normAdjust. The operation precision control parameter LS uses a property which the probability that a value having a large absolute value is generated in a high frequency component of the transform coefficients (lower right region of each of FIGS. 5A and 5B) is low. LS and ILS to be described in detail bellow need to be designed to adjust an operation scale by the quantization and the inverse quantization.

Next, the modulation quantization matrix 133 output from the quantization matrix modulating unit 110 will be described. The quantization matrix 131 before the modulation is a matrix that can change roughness of quantization for every frequency component of the transform coefficients 123. An example of the quantization matrix 131 that corresponds to a $\times 4$ pixel block is represented by the following equation.

$$QM(i, j) = \begin{bmatrix} 16 & 20 & 24 & 28 \\ 20 & 24 & 28 & 32 \\ 24 & 28 & 32 & 36 \\ 28 & 32 & 36 & 40 \end{bmatrix} \qquad (7)$$

The frequency component (i,j) of FIG. 5A and that of the equation 7 are in a one-to-one relation, and indicate a matrix value with respect to a high frequency component in a lower right value. For example, a matrix value of a frequency place (0,3) becomes 28. A relationship between the quantization matrix 131 and the modulation quantization matrix 133 is represented by the following equation.

$$MQM(i,j,idx) = (QM(i,j) + MP(idx)) \qquad (8)$$

Here, QM denotes the quantization matrix 131, and MQM denotes the modulation quantization matrix 133. MP denotes a modulation parameter indicating modulation strength. In this case, the modulation index 132 denotes a modulation method (method of modulating a quantization matrix by addition of a Modulation parameter) illustrated in the equation 8 and a modulation parameter MP. Further, the modulation index 132 may be a number of a table where the modulation method is described.
In the equation 8, an example, of modulating QM by adding the quantization matrix QM and the modulation parameter MP is illustrated. However, subtraction, multiplication, division or bit shift may be performed between QM and MP to modulate QM.
Meanwhile, when performing a different modulation on the quantization matrix QM for every frequency component, the following equation is used.

$$MQM(i,j,idx) = (QM(i,j) + MM(i,j,idx)) \qquad (9)$$

Here, MM denotes a modulation matrix. In this case, the modulation index 132 denotes a modulation method (method of modulating a quantization matrix by addition of a modulation matrix) expressed by the equation 9 and a modulation matrix MM. Further, the modulation index 132 may be a number of a table in which the modulation method is described.
Here, an example of modulating QM by adding the quantization matrix QM and the modulation matrix MM is described. However, subtraction, multiplication, division or bit shift may be performed between QM and MM to modulate QM. The equation 8 is synonymous to the case where all components of the modulation matrix MM of the equation 9 take the same value.
Equation 10 expresses an example of a modulation matrix MM for a quantization block of a $4 \times 4$ size. Similarly to the quantization matrix QM, a relationship between the modulation matrix MM and the frequency place illustrated in FIG. 5A is in a one-to-one relation.

$$MM(i, j) = \begin{bmatrix} 0 & 1 & 2 & 3 \\ 1 & 2 & 3 & 4 \\ 2 & 3 & 4 & 5 \\ 3 & 4 & 5 & 6 \end{bmatrix} \qquad (10)$$

When the quantization matrix QM has a fixed value with respect to the frequency component, instead of the equation 10, the following equation may be used.

7

$$MQM(i,j,idx) = (QM + MM(i,j,idx)) \qquad (11)$$

Here, QM indicates that all components of QM(i,j) take the same value.

The modulation parameter MP and the modulation matrix MM are introduced to perform a modulation on the quantization matrix QM. When the modulation is not performed on QM, MP is 0, or all components of MM are 0, MQM is synonymous to one calculated by the following equation.

$$MQM(i,j,idx) = (QM(i,j)) \qquad (12)$$

When a modulation of the quantization matrix QM is not performed, even though the modulation matrix MM expressed by the following equation is substituted for the equation 9, the same result as the equation 12 is obtained.

$$MM_{Init}(i,j) = \begin{bmatrix} 0 & 0 & 0 & 0 \\ 0 & 0 & 0 & 0 \\ 0 & 0 & 0 & 0 \\ 0 & 0 & 0 & 0 \end{bmatrix} \qquad (13)$$

In this way, the quantizer 105 carries out quantization using the modulation quantization matrix 133 (MM). Here, the quantization matrix 131 as an input parameter is provided from the encoding control unit 113 to the quantization matrix modulating unit 110, but the quantization matrix 131 may not be provided to the quantization matrix modulating unit 110. In this case, a predetermined initial quantization matrix, for example, a matrix $QM_{int}(i,j)$ expressed by the following equation is set to the quantization matrix modulating unit 110.

$$QM_{Init}(i,j) = \begin{bmatrix} 16 & 16 & 16 & 16 \\ 16 & 16 & 16 & 16 \\ 16 & 16 & 16 & 16 \\ 16 & 16 & 16 & 16 \end{bmatrix} \qquad (14)$$

The equation 14 expresses an example wherein all values of the initial quantization matrix $QM_{int}(i,j)$ are 16. However, another value may be used, and a different value may be set for every frequency component. The same predetermined initial quantization matrix may be set between the video encoding apparatus and the video decoding apparatus.

The quantization parameter that is needed in the quantization and the inverse quantization is set in the encoding control unit 113. The quantization parameters used in the quantizer 105 and the inverse quantizer 106 are in a one-to-one relation. The quantized transform coefficients 124 output from the quantizer 105 are input to the inverse quantizer 106 together with the modulation quantization matrix 133. The inverse quantizer 106 performs inverse quantization on the quantized transform coefficients 124 provided from the quantizer 105, using the modulation quantization matrix 133 and the quantization parameter. The inverse quantization corresponding to the quantization of the equation 3 is expressed by the following equation.

$$X'(i,j) = (Y(i,j) \times MQM(i,j,idx)) \times Q_{step} \qquad (15)$$

Here, Y denotes quantized transform coefficients 124, X' denotes inverse-quantized transform coefficients 125, and MQM denotes a modulation quantization matrix 132 used at the time of quantization.

The inverse quantization corresponding to the quantization of the equation 4 is expressed by the following equation.

$$X'(i,j) = \text{sign}(Y(i,j)) \times (\text{abs}(Y(i,j)) \times MQM(i,j,idx)) \times Q_{step} \qquad (16)$$

Here, sign(Y) denotes a function that returns a sign of Y.

In order to simplify an operation, if $Q_{step}$ is designed by a power-of-two, the inverse quantization corresponding to the equation 5 is expressed by the following equation.

$$X'(i,j) = \text{sign}(Y(i,j)) \times (\text{abs}(Y(i,j)) \times MQM(i,j,idx)) << Q_{bit} \qquad (17)$$

According to the equation 17, the multiplication can be replaced by the bit shift, and a process amount that is needed in the multiplication can be reduced.

Meanwhile, the inverse quantization corresponding to the equation 6 in which the operation precision is changed for every frequency component in order to suppress operation precision is expressed by the following equation.

$$X'(i,j) = \text{sign}(Y(i,j)) \times (\text{abs}(Y(i,j)) \times MQM(i,j,jdx) \times ILS(i,j)) << Q_{bit} \qquad (18)$$

Here, ILS denotes an operation precision control parameter to adjust the operation precision of the inverse quantization process for every frequency component. That is, ILS is used to change an operation scale for every frequency place, when the inverse quantization process is performed, and is called LevelScale or normAdjust. A value corresponding to the operation precision control parameter used in the quantization is used as the ILS. Inverse quantization (error signal $4 \times 4$ pixel block) of the H.264 high profile is expressed by the following equation. That is, in order to realize 16-bint operation precision with a small operation amount in the H.264, inverse quantization of the following equation is carried out.

$$X'(i,j) = \text{sign}(Y(i,j)) \times (\text{abs}(Y(i,j)) \times ILS(m,i,j)) << (QP/6) \qquad (19)$$

Here, the level scale ILS(m,i,j) is a value defined in an equation 20, and QP is a quantization parameter that takes values from 0 to 51.

$$ILS(m,i,j) = QM(i,j) \times Norm(m,i,j) \qquad (20)$$

Here, Norm(m,i,j) is a scale adjusting parameter expressed by the equation 5, and each element is expressed by the equation 6.

$$Norm(m,i,j) = \begin{cases} v_{m,0} & \text{for} \quad (i,j) = \{(0,0),(0,2),(2,0),(2,2)\} \\ v_{m,1} & \text{for} \quad (i,j) = \{(1,1),(1,3),(3,1),(3,3)\} \\ v_{m,2} & \text{otherwise;} \end{cases} \qquad (21)$$

$$v_{mn} = \begin{bmatrix} 10 & 16 & 13 \\ 11 & 18 & 14 \\ 13 & 20 & 16 \\ 14 & 23 & 18 \\ 16 & 25 & 20 \\ 18 & 29 & 23 \end{bmatrix} \qquad\qquad (22)$$

The quantization parameter used at the time of quantization in the quantizer 105 also is set to the inverse quantizer 106 by the encoding control unit 113. Thereby, the same quantization parameter needs to be used for both the quantizer 105 and the inverse quantizer 106. Further, the same modulation quantization matrix 133 is used for the quantizer 105 and the inverse quantizer 106.

A loop of the subtracted 101 → the transformed 104 → the quantizer 105 → the inverse quantizer 106 → the inverse transformer 107 → the adder 108 → the reference memory 109 in FIG. 1 is called an encoding loop. The encoding loop takes a round when a process is performed on a combination of one prediction mode, one modulation index, and one block size, which are selectable for the to-be-encoded block. In this case, the combination denotes a combination between an intra-prediction mode, a modulation index 0, and an $8 \times 8$ block size, and a combination between an inter-prediction mode, the modulation index 0, and a $4 \times 4$ block size. Such the process of the encoding loop is performed on the to-be-encoded block a plurality of times. If all of the obtained combinations are completed, an input image signal 120 of a next block is input, and next encoding is performed.

The encoding control unit 113 performs the entire encoding process, such as rate control for controlling the number of generated encoded bits by performing feedback control of the number of generated encoded bits, quantization characteristic control, and mode determination control, control of the predictor 102, and control of an external input parameter. The encoding control unit 113 has functions of performing control of the output buffer 112 and outputting an encoding bit stream 130 to the outside at appropriate timing.

The processes of the encoding unit 100 and the encoding control unit 113 are realized by hardware, but may be realized by software (program) using a computer.

(Specific example of a quantization matrix modulating unit 110)

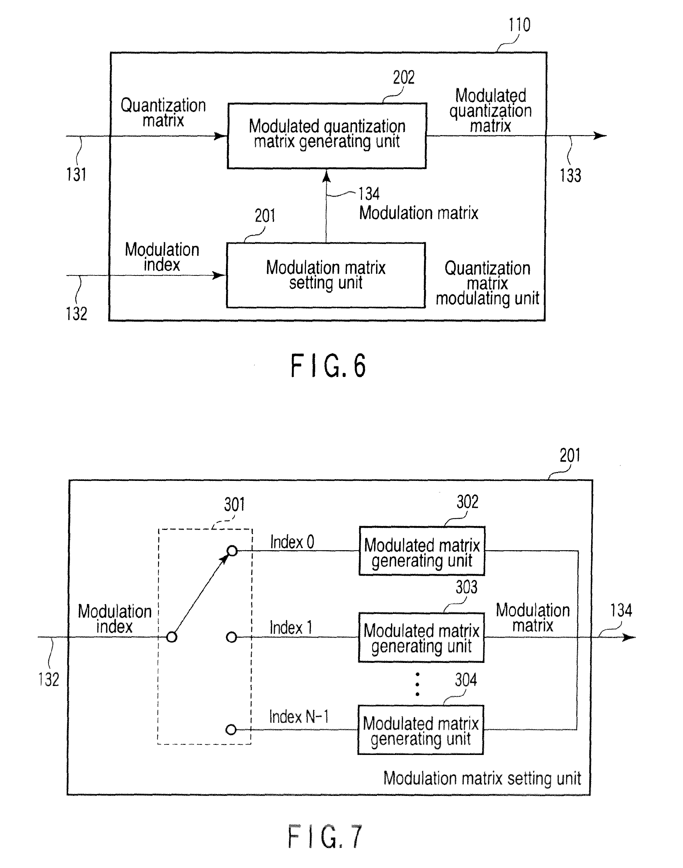

Next, a specific example of the quantization matrix modulating unit 110 will be described. As illustrated in FIG. 6, the quantization matrix modulating unit 110 has a modulation matrix setting unit 201 and a modulation quantization matrix generating unit 202. In FIG. 1, the modulation index 132 output from the mode determining unit 103 is input to the modulation matrix setting unit 201. In FIG. 1, the quantization matrix 131 that is set as the input parameter from the encoding control unit 113 and held in advance is input to the modulation quantization matrix generating unit 202.

In the modulation matrix setting unit 201, the modulation matrix 134 corresponding to the modulation index 132 is set to the modulation quantization matrix generating unit 202. In the modulation quantization matrix generating unit 202, a modulation is performed on the quantization matrix 131 using the modulation matrix 134, and a modulation quantization matrix 133 is generated. The generated modulation quantization matrix 133 is output from the quantization matrix modulating unit 110.

(Modulation matrix setting unit 201)

As illustrated in FIG. 7, the modulation matrix setting unit 201 has a switch 301, and modulation matrix generating units 302, 303, and 304 which are different from each other with respect to generation methods or modulation parameters. The switch 301 has a function of activating any one of the modulation matrix generating units 302, 303, and 304 by switching according to a value of the input modulation index 132. For example, when the modulation index 132 is idx = 0, the switch 301 operates the modulation matrix generating unit 302. Similarly, the switch 301 operates the modulation matrix generating unit 303 in the case of idx = 1, and operates the modulation matrix generating unit 304 in the case of idx = N - 1. The modulation matrix 134 is generated by the operated modulation matrix generating unit. The generated modulation matrix 134 is set to the modulation quantization matrix generating unit 202.

A specific method for generating the modulation matrix 134 will be described. Here, two generation models for generating the modulation matrix 134 are illustrated. Hereinafter, a method for generating the modulation matrix 134 4 is called a modulation model. A distance from a component of the first row and the first column among the components of the Modulation matrix 134 expressed by equations 24 and 25 is defined as a town distance by the following equation.

$$r = \left| i + j \right| \tag{23}$$

For example, in FIG. 5A, a distance of a frequency component that is located at (i,j) = (3,3) becomes 6. Meanwhile, in the case of the $8 \times 8$ block illustrated in FIG. 5B, a distance of a frequency component that is located at (i,j) = (3,7) becomes 10.

As in this embodiment, in an example in which the modulation matrix 134 is added to the quantization matrix 131, each frequency component of the quantization matrix 131 and the modulation matrix 134 is in a one-to-one relation. That is, when a value of r (matrix value of the modulation matrix 134) is increased, a modulation is performed on a high frequency component, and when the value of r is decreased, a modulation is performed on a low frequency component. Hereinafter, a modulation model to modulate the quantization matrix 131 will be described.

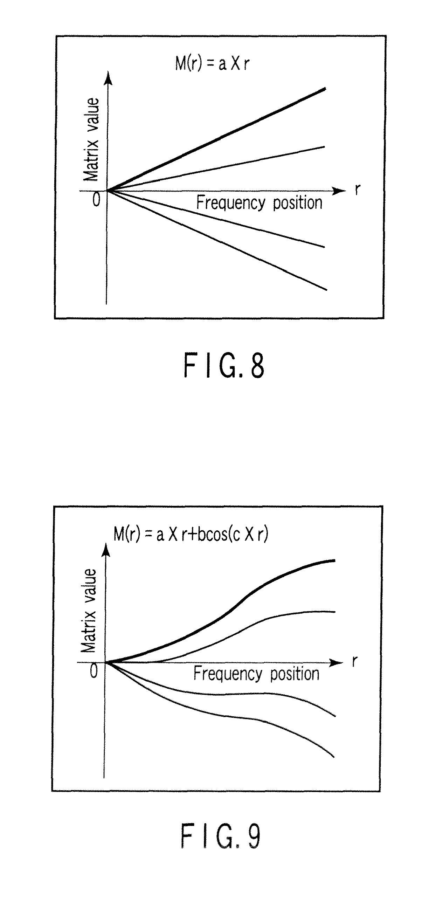

FIG. 8 illustrates a modulation model defined by a linear function, which is represented by the following equation.

$$MM(i,j) = a \times r \tag{24}$$

In the equation 24, a denotes a parameter to control modulation strength. Hereinafter, the parameter a is called a modulation control parameter. The modulation control parameter a has a value as a first image limit of FIG. 8 when a positive value is taken, and has a value as a fourth image limit when a negative value is taken. Thereby, when the modulation control parameter a has a large value, a strong modulation is performed on a high frequency component.

FIG. 9 illustrates a modulation model in the case of using a linear function and a sine function, which is expressed by the following equation.

$$MM(i,j) = a \times r + b \times sin(c \times r) \tag{25}$$

In the equation 25, b and c denote modulation control parameters, similarly to a. The sine function becomes a term for adding a distortion to the linear function. The modulation control parameter c is a parameter for controlling a variation period of the sine function. The modulation control parameter b is a parameter for controlling strength of the distortion.

Here, an example of using a linear function model or a sine function model as the modulation model is illustrated, but as another example of the modulation model, a logarithm model, an autocorrelation function model, a proportional/ inversely proportional model, an N-order function (N ≥ 1) model, or a generalization Gauss function model including a Gauss function or a Laplace function may be used. Regardless of which model is used, it is important to use the same modulation as the modulation used in the video encoding apparatus even in the video decoding apparatus, but this is enabled by designating the modulation model by the modulation index 132 in the video encoding apparatus.

For convenience of explanation, the modulation matrix generating units 302, 303, and 304 correspond to the index 0, the index 1, and the index (N-1), respectively. However, the modulation matrix generating unit may be prepared according to a value of the index number N, and the same modulation matrix generating unit may be used for a different value of the index. For example, Tables 1 to 3 illustrate examples of combinations of modulation models and modulation control parameters for the modulation index 132.

Table 1

| Modulation index number(N=4) | Modulation model | Parameter A | Parameter B | Parameter c |
|---|---|---|---|---|
| 0 | | N/A | N/A | N/A |
| 1 | Equation(24) | -2 | N/A | N/A |
| 2 | Equation(24) | 2 | N/A | N/A |
| 3 | Equation(24) | 4 | N/A | N/A |
| ... | ... | ... | ... | ... |

Table 2

| Modulation index number (N=8) | Modulation model | Parameter a | Parameter B | Parameter c |
|---|---|---|---|---|
| 0 | | N/A | N/A | N/A |
| 1 | Equation(24) | -2 | N/A | N/A |
| 2 | Equation(24) | -1 | N/A | N/A |
| 3 | Equation(24) | 1 | N/A | N/A |
| 4 | Equation(24) | 2 | N/A | N/A |
| 5 | Equation(25) | -1 | 2 | Π/4 |
| 6 | Equation(25) | 1 | 2 | Π/4 |
| 7 | Equation(25) | 1 | 2 | Π/4 |
| ... | ... | ... | ... | ... |

Table 3

| Modulation index number | Modulation model | Parameter a | Parameter B | Parameter c |
|---|---|---|---|---|
| ... | ... | ... | ... | ... |
| -3 | Equation(24) | -3 | N/A | N/A |
| -2 | Equation(24) | -2 | N/A | N/A |
| -1 | Equation(24) | -1 | N/A | N/A |
| 0 | Equation(24) | 0 | N/A | N/A |
| 1 | Equation(24) | 1 | N/A | N/A |
| 2 | Equation(24) | 2 | N/A | N/A |
| 3 | Equation(24) | 3 | N/A | N/A |
| ... | ... | ... | ... | ... |

In Tables 1 to 3, a symbol N/A means that an object parameter is not used in the currently regulated modulation model. The index 0 indicates the case where a modulation is not performed, that is, the equation 12 is used.

Table 1 illustrates an example of combinations of modulation control parameters and a modulation model when a modulation index is regulated by 2 bits (N = 4). In this case, since only the modulation model expressed by the equation 24 is used, the modulation matrix generating unit of FIG. 7 may be only one. In accordance with the modulation index, the previously set modulation control parameter a is read, and a modulation matrix is generated.

Table 2 illustrates an example of the case when a modulation index is regulated by 3 bits (N = 8) and a plurality of modulation models are used. In this case, two modulation models of the equation 24 and 25 are used. Similarly to Table 1, a modulation matrix is generated in accordance with the predetermined modulation control parameter.

As illustrated in Table 1, when a modulation model represented by only one modulation control parameter is used, a value of the modulation index may be directly associated with the modulation control parameter. An example of the above case is illustrated in Table 3. In the association of Tables 1 and 2, the modulation matrix is generated in accordance with the predetermined table. Meanwhile, in the case of Table 3, modulation strength of the quantization matrix can be directly changed. That is, the previous setting is not needed, and a large value may be directly set and a modulation matrix may be generated, if necessary.

(Modulation quantization matrix generating unit 202)

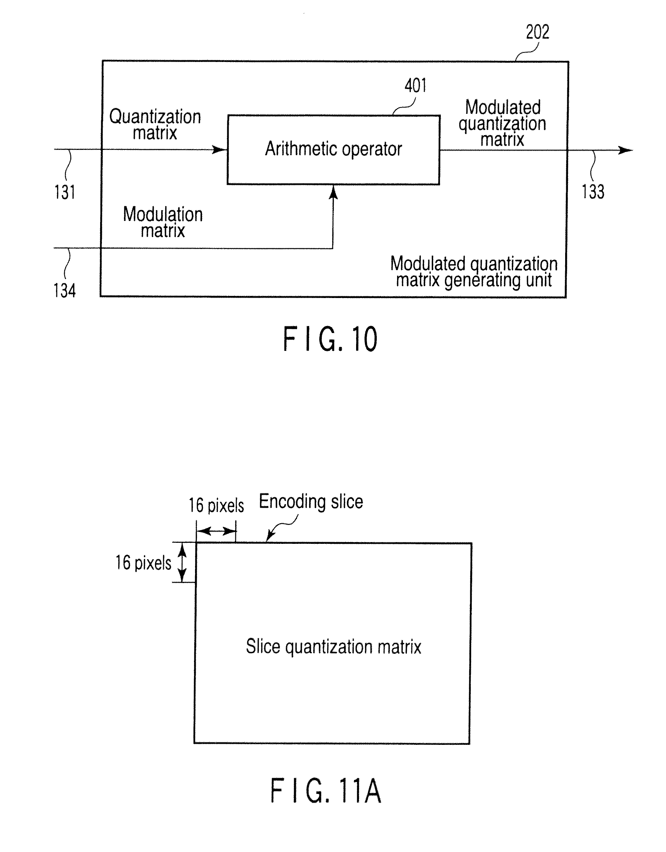

As illustrated in FIG. 10, the modulation quantization matrix generating unit 202 has an arithmetic operator 501. The arithmetic operator 401 can perform basic operations, such as subtraction, multiplication, division, and bit shift, as well as addition. Further, the basic operations are combined, and addition, subtraction, multiplication, and division of a matrix can be performed.

In the arithmetic operator 401, the modulation matrix is input from the modulation matrix setting unit 203 and the quantization matrix 131 is input from the encoding control unit 113, and a modulation is performed on the quantization matrix 131. In this embodiment, the quantization matrix 131 is modulated by addition of the modulation matrix (MM) expressed by the equation 9, and the modulation quantization matrix 133 is generated. The generated modulation quantization matrix 133 is output from the modulation quantization matrix generating unit 202.

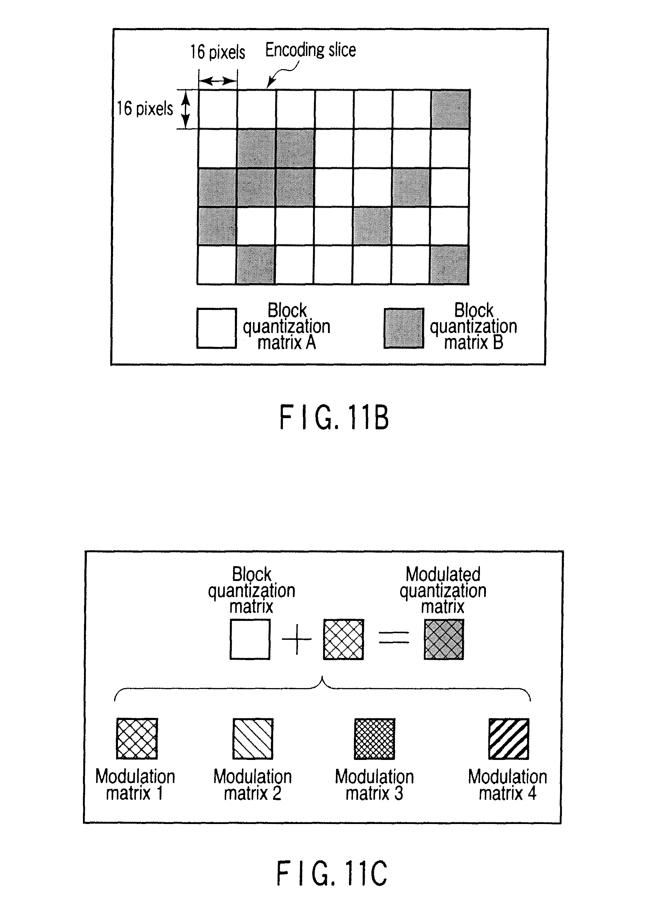

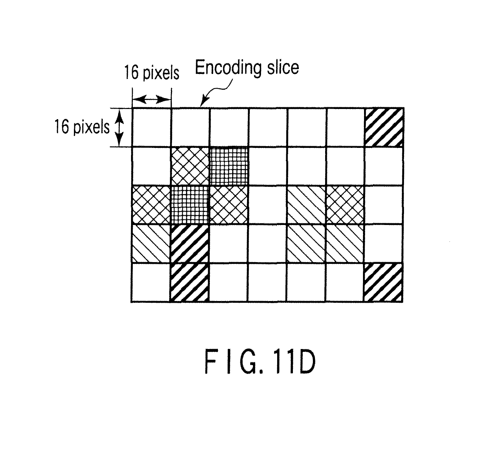

Next, a modulation of the quantization matrix will be described using FIGS. 11A, 11B, 11C, and 11D. FIG. 11A illustrates a quantization matrix allocated to a macroblock, when the modulation matrix is not used as in the equation 12. In this case, since the same quantization matrix 131 is applied to all of the macroblocks of encoding slices, the quantization matrix is described as a slice quantization matrix in FIG. 11A.

Meanwhile, FIG. 11B illustrates an example of the case of using two modulation matrixes (N = 2). Further, FIG. 11D illustrates an example of using four modulation matrixes (N = 4) illustrated in FIG. 11C. FIG. 11C illustrates four modulation matrixes 203 set by the modulation matrix setting unit 203 for the quantization matrix 131. In the modulation quantization matrix generating unit 202, a modulation by addition of the modulation matrix (MM) illustrated in FIG. 9 is performed, and a quantization matrix (called block quantization matrix) having a different characteristic can be generated in a local region in the encoding slice, as illustrated in FIGS. 11B and 11D. Thereby, the different quantization matrix may be applied in the local area in the encoding slice.

(Encoding process sequence)

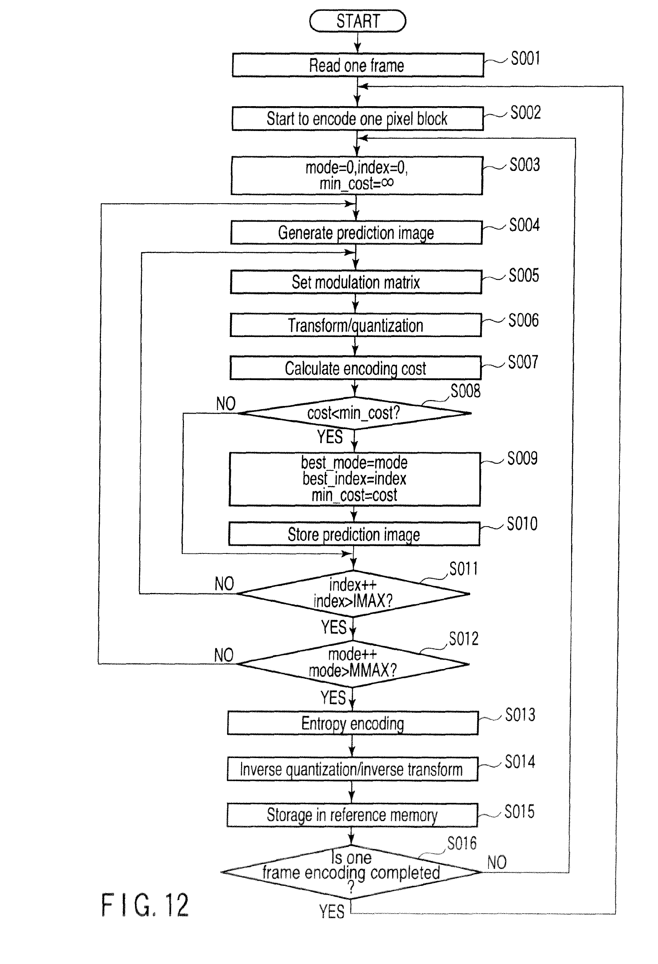

Next, a video encoding process sequence according to this embodiment will be described using FIG. 12. If a moving picture signal is input to the video encoding apparatus, a moving picture frame of a to-be-encoded is read (S001), the read moving picture frame is divided into a plurality of macroblocks, and an input image signal 120 in the macroblock unit is input to the encoding unit 100 (S002). At this time, in the mode determining unit 103, initialization of a prediction mode: mode and a modulation index 132: index and initialization of an encoding cost: min_cost are performed (S003).

Next, a prediction image signal 121 in one mode that can be selected for the to-be-encoded block is generated using the input image signal 120 in the predictor 102 (S004). Although not illustrated in FIG. 12, a difference between the input image signal 120 and the generated prediction image signal 121 is calculated, and a prediction residual signal 122 is generated. The generated prediction residual signal 122 is subjected to an orthogonal transform by the transformer 104 (first half of S006), and the transform coefficients 123 generated by the orthogonal transform are input to the quantizer 105.

Meanwhile, a modulation matrix is set according to a value of the modulation index 132: index selected by the mode determining unit 103 (S005). The modulation quantization matrix 132 is generated by the quantization matrix modulating unit 110 using the set modulation matrix, and quantization of the transform coefficients 123 is performed by the quantizer 105 using the modulation quantization matrix 132 (second half of S006). Here, the encoding distortion D and the number of encoded bits R are calculated, and an encoding cost: cost is calculated using the equation 3 (S007).

The mode determining unit 103 determines whether the calculated encoding cost: cost is smaller than a minimum cost: min_cost (S008). When cost is smaller than the minimum cost: min_cost (when the result of S008 is YES), min_cost is updated by cost, the prediction mode at this time is held as best_mode, and the modulation index 132: index at this time is held as best_index (S009). At the same time, the prediction image signal 121 is temporarily stored in an internal memory (S010)

Meanwhile, when the cost is larger than the minimum cost: min_cost (when the result of S008 is NO), the modulation index 132: index is incremented, and it is determined whether the index after the increment is the final of the modulation index 132 (S011). When the index is larger than IMAX as a final number of the modulation index 132 (when the result of S011 is YES), information of best_index is delivered to the entropy encoder 111. Meanwhile, when the index is smaller than IMAX (when the result of S011 is NO), the process of the encoding loop is executed again using the updated modulation index.

When the result of step S010 is YES, the prediction mode: mode is incremented, and it is determined whether the mode after the increment is the final of the prediction mode (S012). When the mode is larger than MMAX as a final number of the prediction mode (when the result of S012 is YES), prediction mode information of best_mode and the quantized transform coefficients 123 are transmitted to the entropy encoder 111, and entropy encoding of the previously fixed modulation index 132 and the transform coefficients 111 is performed (S013). Meanwhile, when the mode is smaller than MMAX (when the result of S012 is NO), the process of the encoding loop is performed for the prediction mode illustrated in a next mode.

If encoding in best_mode and best_index is performed, the quantized transform coefficients 124 are input to the inverse quantizer 106, and inverse quantization is performed by the same best_index as the modulation index used at the time of quantization (first half of S014). Further, the inversely quantized transform coefficients 125 are input to the inverse transformer 107, and an inverse transform is performed (second half of S014). The reproduced prediction residual signal 126 and the prediction image signal 124 of best_mode provided from the mode determining unit 103 are added.

As a result, the generated decoding image signal 127 is held in the reference memory 109 (S015).

Here, it is determined whether an encoding process of one frame is completed (S016). When the process is completed (when the result of S106 is YES), an image signal of a next frame is input and an encoding process is performed. Meanwhile, when an encoding process of one frame is not completed (when the result of S016 is NO), an image signal of a next target block is input, and the encoding process is continuously performed.

(Method for encoding syntax)

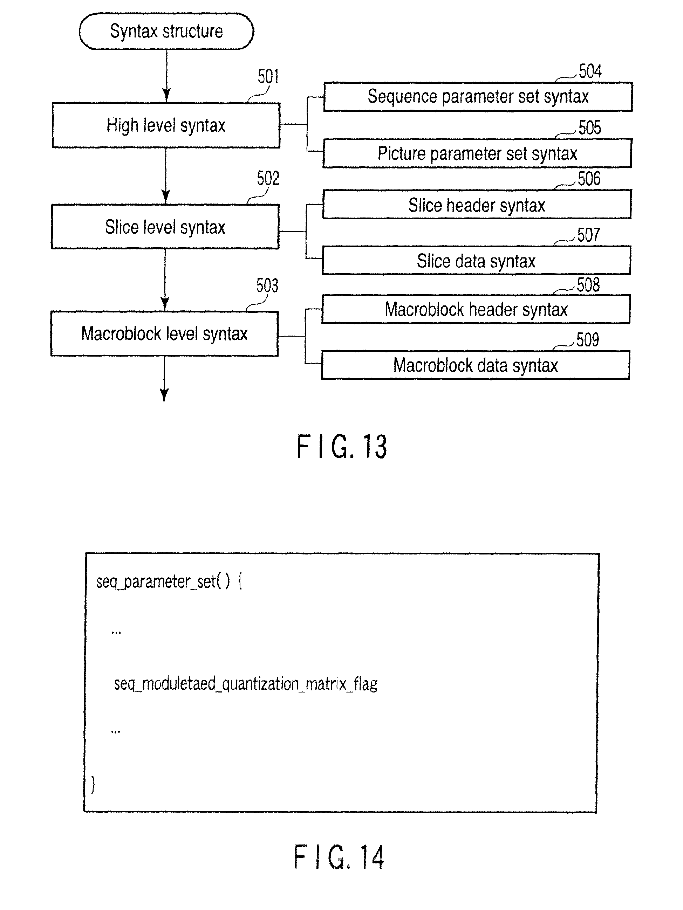

Next, a method for encoding syntax used in this embodiments will be described. FIG. 13 schematically illustrates a structure of syntax used in this embodiment. The syntax mainly includes three parts. In the high level syntax 501, syntax information of an upper layer more than the slice is written. In the slice level syntax 502, information that is needed for every slice is clearly written. A change value of a quantization parameter or mode information that is needed for every macroblock is recited in the macroblock level syntax 503.

The syntaxes 501 to 503 include detailed syntaxes. The high level syntax 501 includes sequence level and picture level syntaxes, such as sequence parameter set syntax 504 and picture parameter set syntax 505. The slice level syntax 502 includes slice header syntax 506 and slice data syntax 507. The macroblock level syntax 503 includes macroblock layer syntax 508 and macroblock prediction syntax 509.

The syntax information needed in this embodiment includes the sequence parameter set syntax 504, the picture parameter set sequence 505, the slice header syntax 506, and the macroblock layer syntax 508. The individual syntaxes 504 to 506 will be described in detail below. As illustrated in the sequence parameter set syntax of FIG. 14, seq_moduletaed_quantization_matrix_flag is a flag indicating whether performance or non-performance of a modulation of a quantization matrix, that is, performance or non-performance of quantization of the quantizer 105 using the modulation quantization matrix 133 (performance or non-performance of quantization using the quantization 131 before the modulation) is changed or not for every sequence. When the corresponding flag seq_moduletaed_quantization_matrix_flag is TRUE, it is possible to switch whether or not to use the modulation of the quantization matrix in a sequence unit. Meanwhile, when the corresponding flag seq_moduletaed_quantization_matrix_flag is FALSE, the modulation of the quantization matrix cannot be used in the sequence.

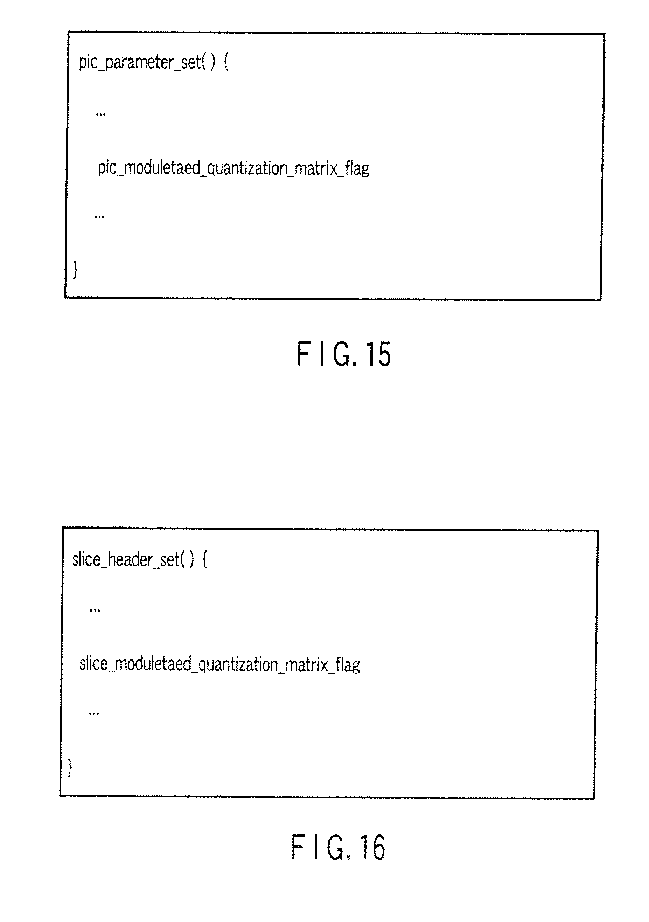

As illustrated in the picture parameter set syntax of FIG. 15, pic_moduletaed_quantization_matrix_flag is a flag indicating whether use or non-use of a modulation of a quantization matrix is changed for every picture. When the corresponding flag pic_moduletaed_quantization_matrix_flag is TRUE, it is possible to switch whether or not to use the modulation of the quantization matrix in a picture unit. Meanwhile, when the corresponding flag pic_moduletaed_quantization_matrix_flag is FALSE, the modulation of the quantization matrix cannot be used in the picture.

As illustrated in the slice header syntax of FIG. 16, slice_moduletaed_quantization_matrix_flag is a flag indicating whether use or non-use of a modulation of a quantization matrix is changed for every slice. When the corresponding flag slice_moduletaed_quantization_matrix_flag is TRUE, it is possible to switch whether or not to use the modulation of the quantization matrix in a slice unit. Meanwhile, when the corresponding flag slice_moduletaed_quantization_matrix_flag is FALSE, the modulation of the quantization matrix cannot be used in the slice.

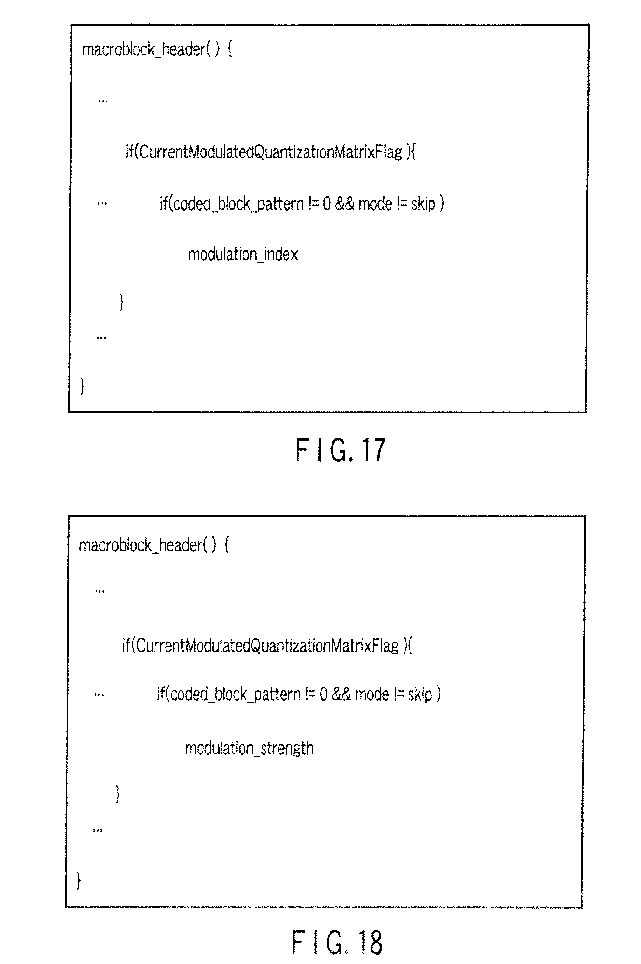

As illustrated in the macroblock layer syntax of FIG. 17, modulation_index denotes a modulation index. In the syntax, coded_block_pattern is an index indicating whether transform coefficients are generated in the corresponding block. When the corresponding index coded_block_pattern is 0, since the transform coefficients are not generated in the corresponding macroblock, it is not necessary to perform inverse quantization at the time of decoding. In this case, since information that is related to a quantization matrix does not need to be transmitted, modulation_index is not transmitted.

Meanwhile, a mode in the syntax is an index indicating a prediction mode. When the corresponding index mode selects a skip mode, the corresponding block does not transmit the transform coefficients, similarly to the above case. Accordingly, modulation_index is not transmitted.
Current Modulated Quantization Matrix Flag becomes TRUE when at least one of
seq_moduletaed_quantization_matrix_flag,
pic_moduletaed_quantization_matrix_flag, and
slice_moduletaed_quantization_matrix_flag is TRUE, but becomes FALSE when the condition is not satisfied.
When the corresponding flag
Current Modulated Quantization Matrix Flag is FALSE, modulation_index is not transmitted, and a value corresponding to 0 is set to the modulation index 132. As illustrated in Tables 1 and 2, modulation_index previously holds a table where a modulation model and a modulation control parameter are determined for every index.

The macroblock_data syntax illustrated in FIG. 17 may be changed to syntax illustrated in FIG. 18. In the syntax illustrated in FIG. 18, modulation_strength is transmitted, instead of modulation_index in the syntax of FIG. 17. The modulation_index previously holds the table where the modulation model and the modulation control parameter are determined, as described above. Meanwhile, in the modulation_strength, the modulation model is fixed, and a value of the modulation control parameter is directly transmitted. That is, the syntax of FIG. 18 corresponds to the method described in Table 3. In this case, the number of transmission encoded bits for transmitting modulation_strength is generally increased, and a degree of freedom to change modulation strength of the quantization matrix is high. Therefore, flexible quantization is enabled. Accordingly, any one of the syntax of FIG. 17 and the syntax of FIG. 18 may be selected in consideration of a balance of the decoding image and the number of encoded bits.

In FIG. 18, Current Modulated Quantization Matrix Flag is TRUE when at least one of seq_moduletaed_quantization_matrix_flag, pic_moduletaed_quantization_matrix_flag, and slice_moduletaed_quantization_matrix_flag is TRUE, but becomes FALSE when the condition is not satisfied. When the corresponding flag Current Modulated Quantization Matrix Flag is FALSE, modulation_strength is not transmitted, and a value corresponding to 0 is set to a modulation index 132.

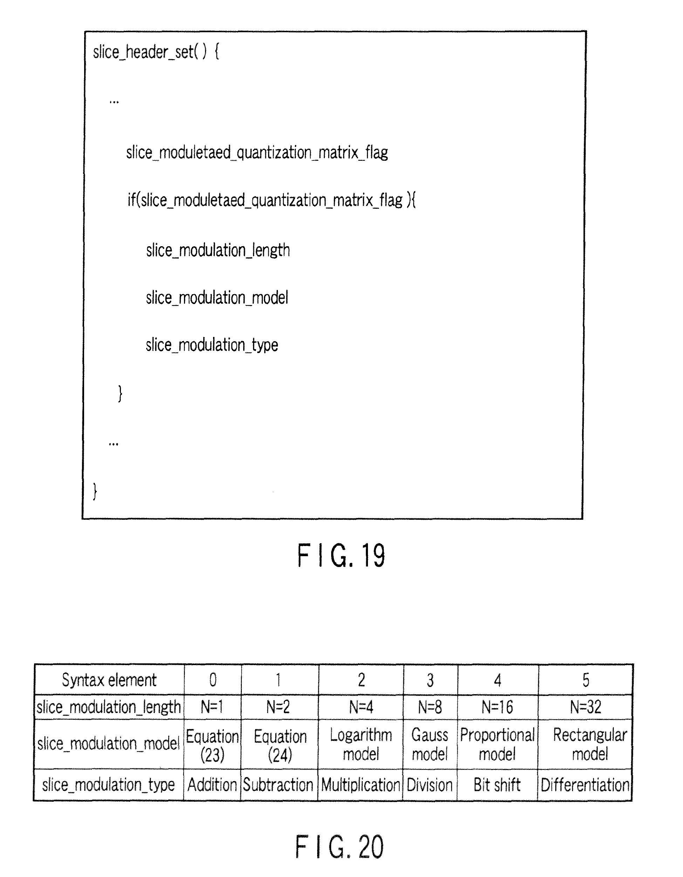

As another example, the slice header syntax illustrated in FIG. 16 may be changed to syntax illustrated in FIG. 19. The syntax of FIG. 19 and the syntax of FIG. 16 are different from each other in that three indexes of slice_modulation_length, slice_modulation_model, and slice_modulation_type are additionally transmitted, when slice_moduletaed_quantization_matrix_flag is TRUE.

FIG. 20 illustrates an example of semantics for these syntax elements. The slice_modulation_length indicates a maximum value of the modulation index 132. For example, when the slice_modulation_length is 2, this means that modulation matrixes of N = 4 kinds can be used. The slice_modulation_model indicates a used modulation model. For example, when slice_modulation_model is 0, this means that the equation 19 is used, and when slice_modulation_model is 1, this means that a modulation model corresponding to the equation 20 is allocated. The slice_modulation_type defines a modulation operation method of the modulation matrix for the quantization matrix. For example, when the slice_modualtion_type is 0, this means that a modulation by addition is performed, and when the slice_modualtion_type is 4, this means that a modulation by a bit shift is performed.

As described above, in the first embodiment, a modulation is performed on the quantization matrix, quantization/inverse quantization is performed on the transform coefficients using a modulation quantization matrix, and quantized transform coefficients and a modulation index indicating a modulation method of a quantization matrix are subjected to entropy encoding. Accordingly, as compared to the related art, while high encoding efficiency is maintained, encoding without increasing a decoding-side operation cost can be realized. That is, appropriate encoding can be performed according to contents of a target block.

(Second Embodiment)

When the quantizer 105 and the inverse quantizer 106 perform quantization and inverse quantization corresponding to the equations 6 and 18, instead of performing the modulation on the quantization matrix as in the first embodiment, a modulation may be performed on an operation precision control parameter to control operation precision at the time of quantization/inverse quantization. In this case, the equations 6 and 18 are changed as follows.

$$Y(i,j) = \text{sign}(X(i,j)) \times (\text{abs}(X(i,j)) \times QM(i,j) \times MLS(i,j,idx) + f) >> Q_{bit} \qquad (26)$$

$$X'(i,j) = \text{sign}(Y(i,j)) \times (\text{abs}(Y(i,j)) \times QM(i,j) \times IMLS(i,j,idx)) << Q_{bit} \qquad (27)$$

Here, MLS and IMLS are modulated operation precision control parameters, which are expressed by the following Equation.

$$MLS(i,j,idx) = (LS(i,j) + MM(i,j,idx)) \qquad (28)$$

$$IMLS(i,j,idx) = (ILS(i,j) + MM(i,j,idx)) \qquad (29)$$

As such, the modulation on the operation precision control parameters LS and ILS is almost equal to the modulation on the quantization matrix by adjusting a value of the modulation matrix. When Equations 26 and 27 are used, the operation precision control parameters LS and ILS may be modulated using subtraction, multiplication, division, and bit shift in addition to addition.

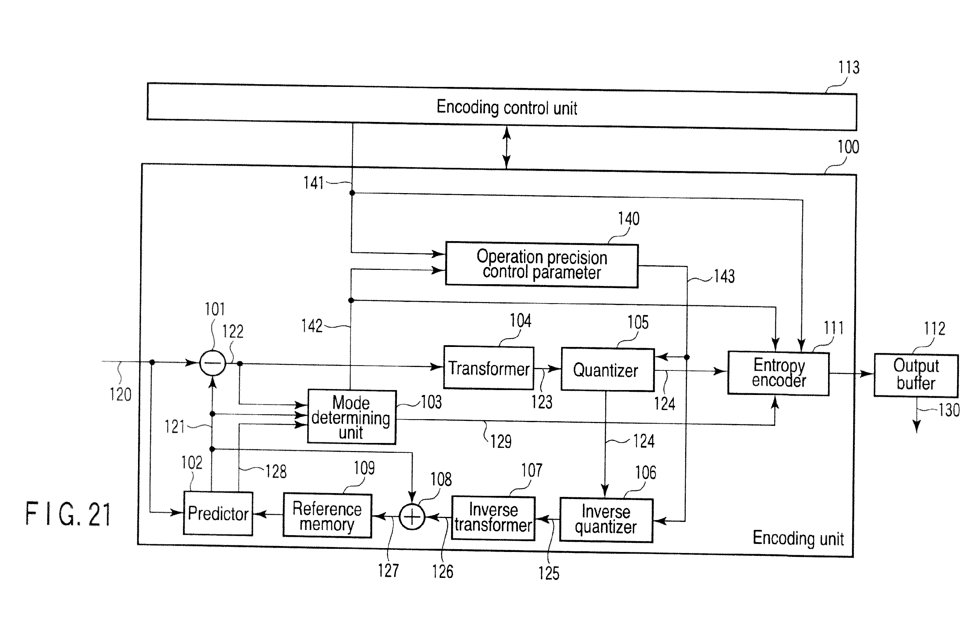

FIG. 21 illustrates a video encoding apparatus according to the second embodiment. In this case, the quantization matrix modulating unit 110 in the video encoding apparatus according to the first embodiment illustrated in FIG. 1 is replaced by the operation precision control parameter modulating unit 140.

In the operation precision control parameter modulating unit 140, the operation precision control parameter 141 corresponding to LS of the equation 28 or ILS of the equation 29 is provided from the encoding control unit 113. Further, the modulation index 142 that corresponds to idx of the equations 26 to 29 and indicates a modulation method is provided from the mode determining unit 103. In the operation precision control parameter modulating unit 140, a modulation is performed on the operation precision control parameter 141 in accordance with the modulation method illustrated by the modulation index 142, and the modulated operation precision control parameter (called modulation control parameter) 143 corresponding to MLS of the equation 28 or MILS of the equation 29 is generated.

The modulation control parameter 143 is provided to the quantizer 105 and the inverse quantizer 106. In the quantizer 105 and the inverse quantizer 106, quantization of the transform coefficients 123 and inverse quantization of the quantized transform coefficients 124 are performed according to the modulation control parameter 143.

As such, according to the second embodiment, the same effect as the first embodiment can be obtained by performing the modulation of the operation precision control parameter to control the operation precision at the time of quantization/inverse quantization, which is the same process as the transform of the quantization matrix in the first embodiment.

(Third Embodiment)

When the quantizer 105 and the inverse quantizer 106 perform quantization and inverse quantization corresponding to the equations 4 and 16, instead of performing the modulation on the quantization matrix as in the first embodiment, a modulation may be performed on the quantization parameter. In this case, Equations 4 and 16 are transformed as follows.

$$Y(i,j) = sign(X(i,j)) \times (abs(X(i,j)) \times QM(i,j)$$
$$\times LS(i,j) + f)/(QP_{step}(i,j,idx)) \qquad (30)$$

$$X'(i,j) = sign(Y(i,j)) \times (abs(Y(i,j)) \times QM(i,j)$$
$$\times ILS(i,j) \times (QP_{step}(i,j,idx)) \qquad (31)$$

Here, $QP_{step}$ is a modulation quantization parameter, which is represented by the following equation.

$$QP_{step}(i,j,idx) = (Q_{step} + MM(i,j,idx)) \qquad (32)$$

Here, $Q_{step}$ denotes a quantization parameter.

As such, the modulation on the quantization parameter $Q_{step}$ is synonymous to the modulation on the quantization matrix. With respect to the quantization/inverse quantization as in the equations 5 and 17 and the equations 6 and 18, a modulation can be performed on the quantization parameter by adjusting the operation precision control parameter.

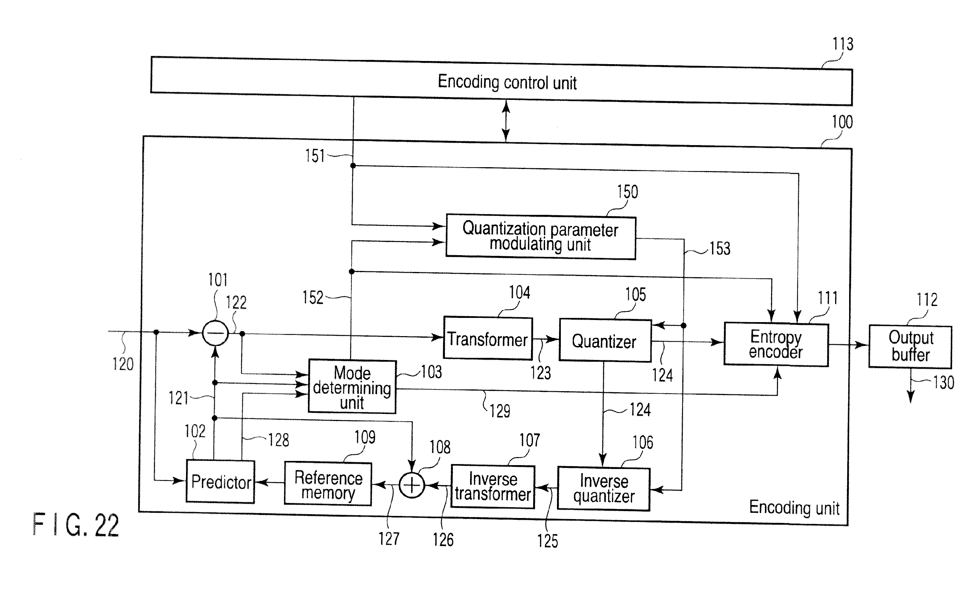

FIG. 22 illustrates a video encoding apparatus according to the third embodiment. In this case, the quantization matrix modulating unit 110 in the video encoding apparatus according to the first embodiment illustrated in FIG. 1 is replaced by a quantization parameter modulating unit 150.

In the quantization parameter modulating unit 150, the quantization parameter 151 corresponding to $Q_{step}$ of the equation 32 is provided from the encoding control unit 113. Further, the modulation index 152 corresponding to idx of the equations 30 and 31 and indicating a modulation method is provided from the mode determining unit 103. In the quantization parameter modulating unit 150, a modulation is performed on the quantization parameter 151 in accordance with the modulation method indicated by the modulation index 152, and the modulation quantization parameter (called modulation quantization parameter) 153 corresponding to $QP_{step}$ of the equations 30 to 32 is generated.

The modulation quantization parameter 153 is provided to the quantizer 105 and the inverse quantizer 106. In the quantizer 105 and the inverse quantizer 106, quantization of the transform coefficients 123 and inverse quantization of the quantized transform coefficients 124 are performed in accordance with the modulation quantization parameter 153.

As such, according to the third embodiment, the same effect as the first embodiment can be obtained by performing the modulation of the quantization parameter at the time of quantization/inverse quantization, which is the same process as the transform of the quantization matrix in the first embodiment.

(Fourth Embodiment)

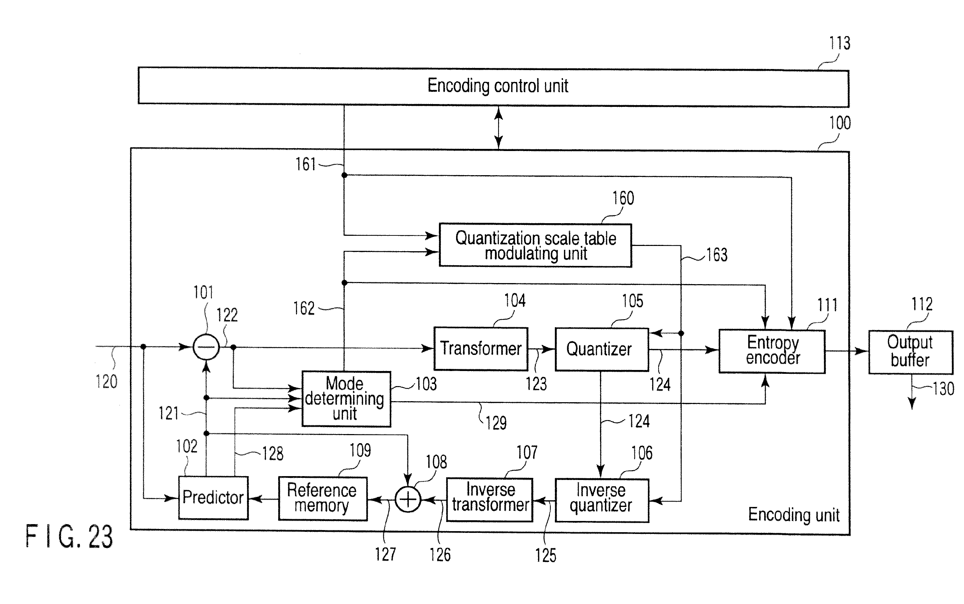

FIG. 23 illustrates a video encoding apparatus according to a fourth embodiment of the present invention. In this case, the quantization matrix modulating unit 110 in the video encoding apparatus according to the first embodiment illustrated in FIG. 1 is replaced by a quantum scale table modulating unit 160.

In the quantum scale table modulating unit 160, a quantum scale table 161 to be described in detail below in provided from the encoding control unit 113, and a modulation index 162 indicating a modulation method is provided from the mode determining unit 103. In the quantum scale table modulating unit 160, a modulation is performed on the quantum scale table 161 in accordance with the modulation method indicated by the modulation index 162, and a modulation quantum scale table 163 is generated.

The modulation quantum scale table 163 is provided to the quantizer 105 and the inverse quantizer 106. In the quantizer 105 and the inverse quantizer 106, quantization of the transform coefficients 123 and inverse quantization of the quantized transform coefficients 124 are performed in accordance with the modulation quantum scale table 163.

Specifically, the quantum scale table modulating unit 160 has a function of setting a change width of a quantum scale controlled by a quantization parameter determining roughness of quantization. At this time, the quantization performed by the quantizer 105 and the inverse quantization performed by the inverse quantizer 106 are represented by the following equations.

$$X'(i,j) = \text{sign}(Y(i,j)) \times (\text{abs}(Y(i,j)) \times QM(i,j)$$
$$\times ILS(i,j) \times (QT_{step}(qp, Tidx)) \qquad (33)$$

$$X'(i,j) = \text{sign}(Y(i,j)) \times (\text{abs}(Y(i,j)) \times QM(i,j)$$
$$\times ILS(i,j)) \times (QT_{step}(qp, Tidx)) \qquad (34)$$

Here, $QT_{step}$ denotes a quantization scale, and roughness in the quantization is controlled according to a value of the quantization scale. Meanwhile, qp denotes a quantization parameter, and a quantization scale that is determined by qp as derived. Tidx denotes a modulation index 162 for a quantum scale table. Here, if qp is changed, the quantization scale is varied, and roughness in the quantization is also varied.

In the moving picture encoding method according to the related art like H. 264, a fixed quantization scale is derived according to a value of the quantization parameter. In this embodiment, a width of the quantization scale when the quantization parameter is changed can be changed by the modulation index 162.

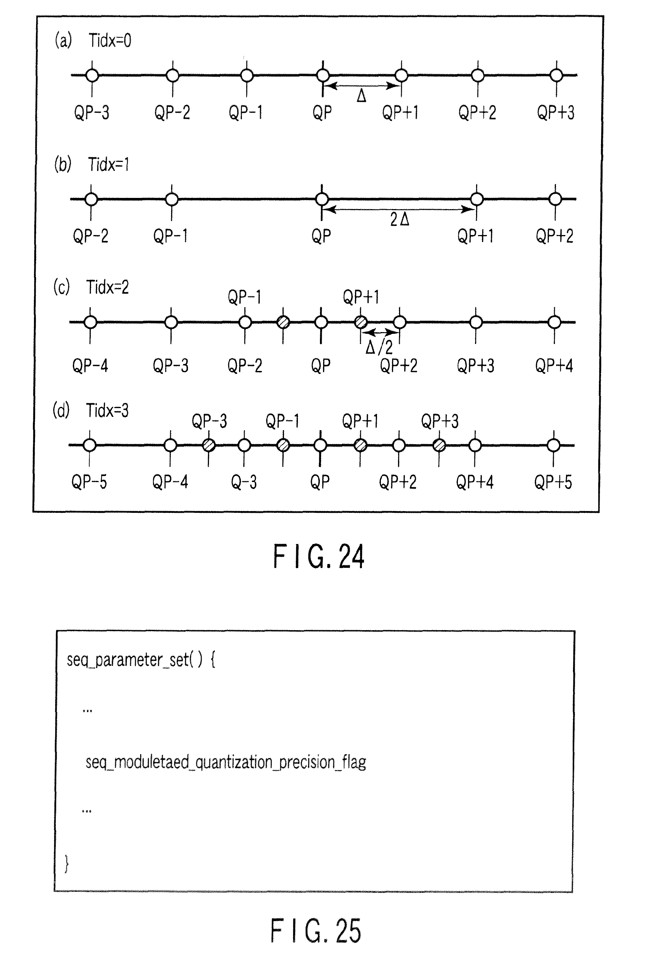

FIG. 24 illustrates a relationship between a quantization parameter and a quantization scale. In this embodiment, a table on which the quantization parameter and the quantization scale are associated with each other is called a quantum scale table. Each circle illustrated in FIG. 24 indicates a quantization parameter qp ($QP \pm i$; i = 1, 2, ...). That is, QP denotes a reference quantization parameter (called a reference parameter), and a quantization parameter qp denotes a variation from QP. Meanwhile, a distance between the circles indicates a quantization scale $\Delta$.

FIG. 24A illustrates an example of when a modulation index 162 corresponds to Tidx = 0. Specifically, FIG. 24A illustrates an example of a quantum scale table when precision of a quantization scale is not changed (when a modulation of the quantum scale table is not performed). As illustrated in FIG. 24A, when a quantization parameter qp is changed from a reference parameter QP, a quantization scale $\Delta$ linearly varies according to the quantization parameter. The variation in the quantization parameter is made according to a buffer amount of the output buffer 112, as well known already.

Meanwhile, FIG. 24B illustrates an example in which the modulation index 162 is Tidx = 1. In this example, the quantization scale $\Delta$ when qp is increased or decreased to $\pm$ 1 is expanded to about twice as much. FIG. 24C illustrates an example in which the modulation index 162 is Tidx = 2. In this example, the quantization scale $\Delta$ when qp is increased or decreased to $\pm$ 1 is reduced to half as much. FIG. 24D illustrates an example in which the modulation index 162 is Tidx = 3. In this example, the quantization scale when qp is increased or decreased to $\pm$ 2 is reduced to half as much. Here, the modulation of the quantum scale table means that the reference quantum scale table illustrated in FIG. 24A is varied according to the modulation index 162 as illustrated in FIGS. 24B, 24C, and 24D. In this case, FIG. 24A corresponds to the quantum scale table 161 that is input to the quantum scale table modulating unit 160, and FIGS. 24B, 24C, and 24D correspond to the modulation quantum scale table 163.

Table 4 illustrates a variation value of a quantization parameter corresponding to the modulation index 162: Tidx and a variation value of the quantization scale at this time. In accordance with Table 4, a change width of the quantization scale corresponding to the target block is determined from the provided qp, and $QT_{step}$ is set. This table information is called precision modulation information 603. As such, by changing the modulation index 162, precision of the quantization scale can be changed in units of macroblock.

Table 4

| Precision modulation index (Tidx) | Quantization parameter variation value | Quantization scale variation value |
| --- | --- | --- |
| 0 | ... | ... |
| | -3 | $-3\triangle$ |
| | -2 | $-2\triangle$ |
| | -1 | $-\triangle$ |
| | 0 | 0 |
| | 1 | $\triangle$ |
| | 2 | $2\triangle$ |
| | 3 | $3\triangle$ |
| | ... | ... |
| 1 | ... | ... |
| | -3 | $-4\triangle$ |
| | -2 | $-3\triangle$ |
| | -1 | $-2\triangle$ |
| | 0 | 0 |
| | 1 | $2\triangle$ |
| | 2 | $3\triangle$ |
| | 3 | $4\triangle$ |
| | ... | ... |

(continued)

| Precision modulation index (Tidx) | Quantization parameter variation value | Quantization scale variation value |
| --- | --- | --- |
| 2 | ... | ... |
| | -3 | -2△ |
| | -2 | -△ |
| | -1 | -△/2 |
| | 0 | 0 |
| | 1 | △/2 |
| | 2 | △ |
| | 3 | 2△ |
| | ... | ... |
| 3 | ... | ... |
| | -4 | -2△ |
| | -3 | -3△/2 |
| | -2 | -△ |
| | -1 | -△/2 |
| | 0 | 0 |
| | 1 | △/2 |
| | 2 | △ |
| | 3 | 3△/2 |
| | 4 | 2△ |
| | ... | ... |

Next, the syntaxes according to this embodiment will be described. Since the syntax structure is the same as that in FIG. 13 described in the first embodiment, the repetitive description will be omitted.

As illustrated in the sequence parameter set syntax of FIG. 25, seq_moduletaed_quantization_precision_flag is a flag indicating whether use or non-use of a modulation of quantization precision is changed for every sequence. When the corresponding flag seq_moduletaed_quantization_precision_flag is TRUE, it is possible to switch whether or not to perform the precision modulation of the quantization scale corresponding to the quantization parameter in a sequence unit. Meanwhile, when the corresponding flag seq_moduletaed_quantization_precision_flag is FALSE, the precision modulation of the quantization scale corresponding to the quantization parameter cannot be used in the sequence.

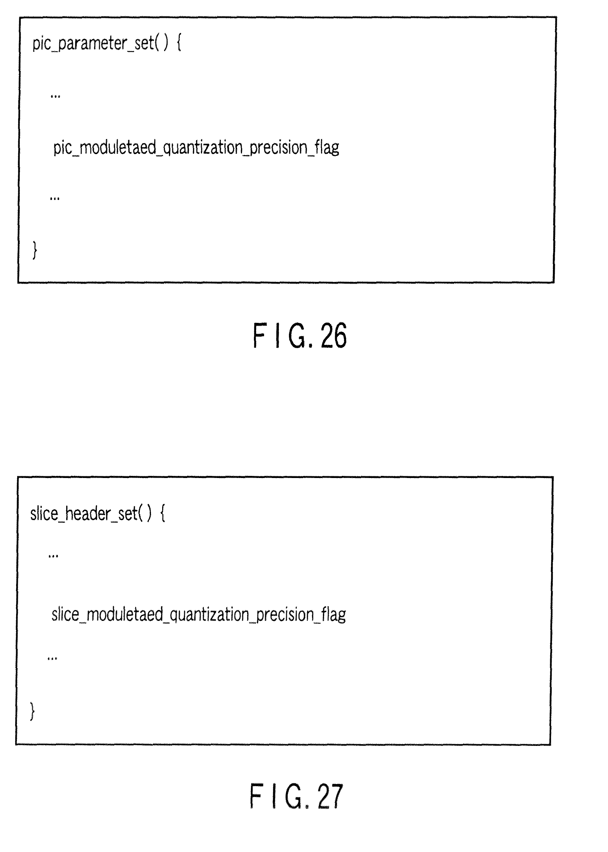

As illustrated in the picture parameter set syntax of FIG. 26, pic_moduletaed_quantization_precision_flag is a flag indicating whether use or non-use of a modulation of quantization precision is changed for every picture. When the corresponding flag pic_moduletaed_quantization_precision_flag is TRUE, it is possible to switch whether or not to use the precision modulation of the quantization scale corresponding to the quantization parameter in a picture unit. Meanwhile, when the corresponding flag pic_moduletaed_quantization_precision_flag is FALSE, the precision modulation of the quantization scale corresponding to the quantization parameter cannot be used in the picture.

As illustrated in the slice header syntax of FIG. 27, slice_moduletaed_quantization_precision_flag is a flag indicating whether use or non-use of a modulation of quantization precision is changed for every slice. When the corresponding flag slice_moduletaed_quantization_precision_flag is TRUE, it is possible to switch whether or not to use the precision modulation of the quantization scale corresponding to the quantization parameter in a slice unit. Meanwhile, when the corresponding flag slice_moduletaed_quantization_precision_flag is FALSE, the precision modulation of the quantization scale corresponding to the quantization parameter cannot be used in the slice.

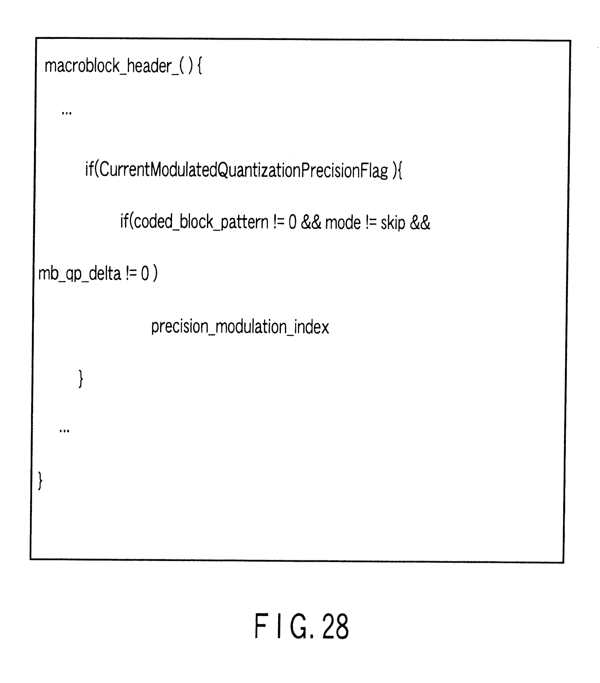

As illustrated in the macroblock layer syntax of FIG. 28, precision_modulation_index indicates a precision modulation index. In the syntax, coded_block_pattern is an index indicating whether transform coefficients are generated in the corresponding block. When the corresponding index coded_block_pattern is 0, since the transform coefficients are not generated in the corresponding macroblock, it is not necessary to perform inverse quantization at the time of decoding. In this case, since information that is related to a quantization process does not need to be transmitted, precision_modulation_index is not transmitted.

Meanwhile, a mode is an index indicating a prediction mode. When the corresponding index mode selects a skip mode, the corresponding block does not transmit the transform coefficients, similarly to the above case. Accordingly, precision_modulation_index is not transmitted.

As illustrated in FIG. 28, mb_qp_delta denotes a variation value of a quantization parameter. In the video encoding method according to the related art like H.264, mb_qp_delta becomes a syntax that encodes a differential value between a quantization parameter of a macroblock (called previous macroblock) encoded immediately before the corresponding macroblock and the quantization parameter of the corresponding macroblock. In this case, mb_ap_delta denotes the differential value. When the quantization parameter is not varied, the quantization precision of the corresponding macroblock, is not varied. Therefore, precision_modualtion_index its not transmitted when mb_qp_delta is 0.

Current Modulated Quantization Precision Flag becomes TRUE when at least one of seq_moduletaed_quantization_precision_flag, pic_moduletaed_quantization_precision_flag, and slice_moduletaed_quantization_precison_flag is TRUE, but becomes FALSE when the condition is not satisfied. When the corresponding flag Current Modulated Quantization Precision Flag is FALSE, precision_modulation_index is not transmitted, and the internal modulation index is set to Tidx = 0. As illustrated in Table 4, precision_modulation_index previously holds a table wherein a quantization parameter variation value and a quantization scale variation value are determined for every index.

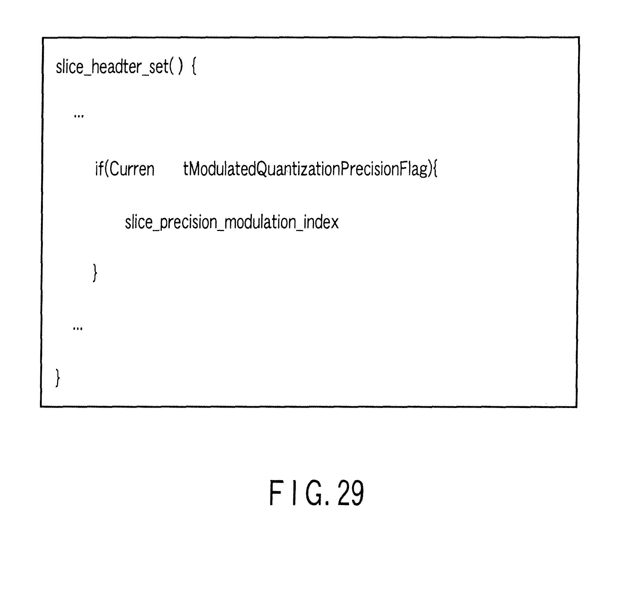

The slice header syntax illustrated in FIG. 27 may be changed to the syntax illustrated in FIG. 29. In the syntax illustrated in FIG. 29, the modulation index of the quantization scale corresponding to the quantization parameter can be changed by the slice level without depending on whether the modulation of the quantization precision is used or not. The slice_precision_modulation_index denotes the modulation index of the quantization scale corresponding to the quantization parameter. When the precision is modulated by the minute macroblock level, overwriting may be performed by the macroblock header syntax illustrated in FIG. 28.

Here, the Current Modulated Quantization Precision Flag becomes TRUE when at least one of seq_moduletaed_quantization_precision_flag and pic_moduletaed_quantization precision_flag as syntax elements having levels higher than the level of the slice header is TRUE, but becomes FALSE when the condition is not satisfied. When the corresponding flag Current Modulated Quantization Precision Flag is FALSE, slice_precision_modulation_index is not transmitted, and the internal modulation index is set to Tidx = 0.

As described above, in the fourth embodiment, using the modulation index by which the quantization precision can be changed with respect to the quantization parameter, the quantization precision suitable for the transform coefficients are set and the quantization/inverse quantization is performed, and quantized transform coefficients and a modulation index indicating a modulation method of quantization precision are subjected to entropy encoding. Accordingly, similarly to the first to third embodiments, while high encoding efficiency is maintained, encoding to fail increase a decoding-side operation cost can be realized. That is, appropriate encoding can be performed according to contents of a target block.

As described also it the first embodiment, when encoding is performed in the selected mode, generation of the decoding image signal may be performed only for the selected mode, and may not be performed in a loop to determine a prediction mode.

(Modifications of the first to fourth embodiments)

(1) In the first embodiment, the example wherein the encoding loops are repetitively temporarily encoded with respect to all the combinations of the to-be-encoded blocks has been described. However, in order to simplify the operation process, preliminary encoding may be performed with respect to the prediction mode that is likely to be previously selected, the modulation index, and the block size, and a combining process of the target blocks that are difficult to be selected may be omitted. If the selective preliminary encoding is performed, encoding efficiency can be suppressed from being lowered or the process amount needed to perform the preliminary encoding can be suppressed.

(2) In the first embodiment, the example where the modulation matrix is generated by the combination tables of the modulation models any the Modulation control parameters illustrated in Tables 1 to 3 has been described. However, as in Tables 1 and 2, when the previously used modulation matrix is fixed, the modulation matrix may be previously held in the internal memory. If this case, since the process of generating a modulation matrix for every macroblock can be omitted, the operation cost can be reduced.

(3) In the first embodiment, the case wherein the quantization matrix and the modulation matrix are added to each other to modulate the quantization matrix has been described. Meanwhile, the modulation may be performed on the quantization matrix using subtraction, multiplication, division, or bit shift between the quantization matrix and the modulation matrix.

Further, the modulation of the quantization matrix may be performed by combining the operations.

In the same way, in the second embodiment, the modulation may be performed on the operation precision control parameter using subtraction, multiplication, division or bit shift as well as addition between the operation precision control parameter and the modulation matrix.

In the same way, in the third embodiment, the modulation may be performed on the quantization parameter using subtraction, multiplication, division or bit shift as well as addition between the quantization parameter and the modulation matrix.

(4) In the first embodiment, a generation model by a town distance is used to generate the modulation; matrix. As a parameters $r$ indicating a distance of a frequency component, at least one of Minkowski distances including a town distance and a Euclidean distance may be used in addition to the town distance.

(5) In the first to fourth embodiments, the case wherein a to-be-processed frame is divided into short blocks such as a $16 \times 16$ pixel size, and encoding is sequentially performed from the upper left block of the screen to the lower right block as illustrated in FIG. 2 has been described. However, the encoding sequence is not limited thereto. For example, the encoding may be sequentially performed toward the upper left block from the lower right block, and the encoding may be sequentially performed in a spiral shape from the center of the screen. Further, the encoding may be sequentially performed toward the lower left block from the upper right block, and the encoding may be sequentially performed toward the central portion of the screen from the peripheral portion.

(6) In the first to fourth embodiments, the quantization block size has been described as the $4 \times 4$ pixel block or the $8 \times 8$ pixel block. However, the to-be-encoded block does not need to have a uniform block shape, and may have any block size of a $16 \times 8$ pixel block, an $8 \times 16$ pixel block, an $8 \times 4$ pixel block, and a $4 \times 8$ pixel block. Further, even in one macroblock, the uniform block size does not need to be taken, and blocks having different sizes may be mixed. In this case, if the number of divisions is increased, the number of encoded bits to encoded division information is increased. However, the block size may be selected in consideration of a balance of the number of encoded bits of the transform coefficients and a local decoding image.

(7) In the first to fourth embodiments, the example in which the transform block size and the quantization block size are the same has been described, but the different block sizes may be used. Even in this case, similarly to the above case, a combination of block sizes may be selected in consideration of a balance of the number of encoded bits and the local decoding image.

<Video Decoding Apparatus>

Next, fifth to eighth embodiments that are related to video decoding will be described.

(Fifth Embodiment)

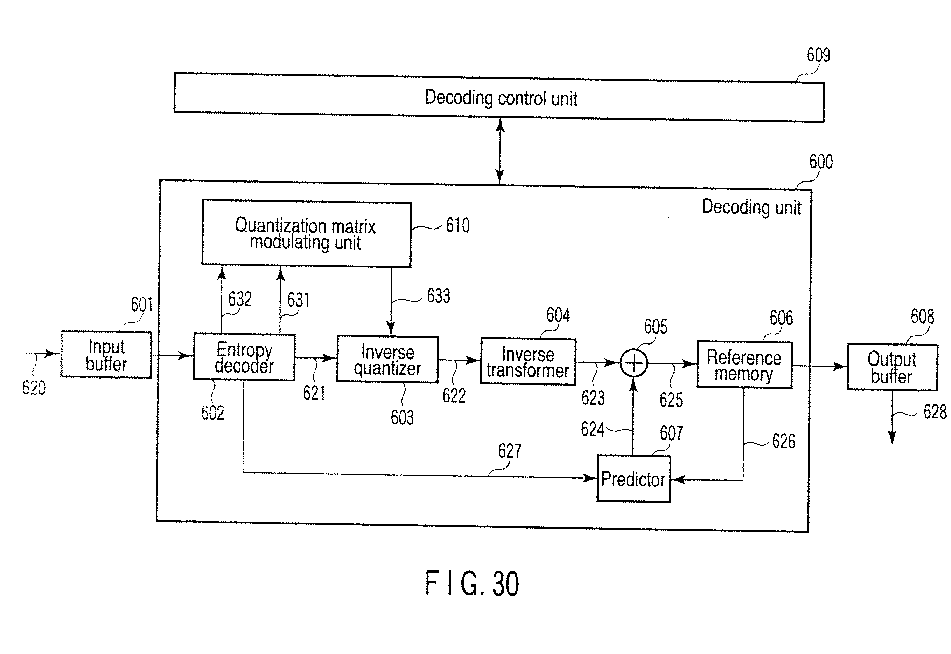

FIG. 30 illustrates a video decoding apparatus according to a fifth embodiment, which corresponds to the video encoding apparatus according to the first embodiment described using FIGS. 1 to 20. An encoding bit stream 620 that is transmitted from the video encoding apparatus illustrated in FIG. 1 and transmitted through the accumulation system or the transmission system is temporarily accumulated in an input, buffer 601. The multiplexed encoding data its input from the input buffer 601 to a decoding unit 600.

In the decoding unit 600, the encoding data is input to an entropy decoder 602. In the entropy decoder 602, decoding by a syntax analysis is performed for every frame, on the basis of the syntaxes described using FIGS. 13 to 20 in the first embodiment. That is, in the entropy decoder 602, entropy decoding of code strings of the individual syntaxes is sequentially performed on a high level syntax, a slice level syntax, and a macroblock level syntax in accordance with the syntax structure illustrated in FIG. 13. The quantized transform coefficients 621, the quantization matrix 631, the modulation index 632, the quantization parameter, and the prediction mode information 627 (including motion vector information) are decoded.

The quantized transform coefficients 621 are input to the inverse quantizer 603. The quantization matrix 631 and the modulation index 632 are input to the quantization matrix modulating unit 610. In the quantization matrix modulating unit 610, the quantization matrix 632 is modulated using a modulation method indicated by the modulation index 632, and a modulation quantization matrix 633 is generated. The modulation quantization matrix 633 is provided to the inverse quantizer 603.

In the inverse quantizer 603, inverse quantization is performed on the quantized transform, coefficients 621 on the basis of the modulation quantization matrix, 633. Here, a parameter related to necessary quantization (for example, quantization parameter) is set from the entropy decoder 602 to the decoding control unit 609, and is read when inverse quantization is performed.

Transform coefficients 622 after the inverse quantization are input to the inverse transformer 604. The inverse transformer 604 subjects the transform coefficients 622 after the inverse quantization to an inverse transform to the transform of the transformer 104 of the video encoding apparatus of FIG. 1, for example, an inverse orthogonal transform such as the IDCT, whereby the decoding prediction residual signal 623 is generated. Here, an example of the inverse orthogonal transform has been described. However, when the Wavelet transform or the independent component analysis is performed by the transformer 104 of the video encoding apparatus illustrated in FIG. 1, an inverse Wavelet transform or an inverse independent component analysis is performed by the inverse transformer 604.

The decoding prediction residual signal 623 is added to the prediction image signal 624 from the predictor 607 by the adder 605, and a decoding image signal 625 is generated. The decoding image signal 625 is accumulated in a reference memory 606, read from the reference memory 606, and output from the decoding unit. 600. After the decoding image signal output from the decoding unit 600 is temporarily accumulated in the output buffer 608, the decoding image signal is output as a reproduction image signal 628 in accordance with output timing managed by the decoding control unit 609.

The prediction mode information 627 decoded by the entropy decoder 602 is input to the predictor 607. Meanwhile, the reference image signal 626 read from the reference memory 606 in which the decoding image signal subjected to decoding is accumulated is also input to the predictor 607. In the predictor 607, if the inter-frame prediction or intra-frame prediction is performed on the basis of the prediction mode information 627 (including motion vector information), a prediction image signal 624 is generated. The prediction image signal 642 is input to the adder 605.

The decoding control unit 609 performs control of output timing for the input buffer 601 and the output buffer 608, control of decoding timing, and control of a decoding process including a management of the reference memory 606.

The processes of the decoding unit 600 and the decoding control unit 609 can be realized by hardware, but may be realized by software (program) using a computer.

The process of the inverse quantizer 603 in this embodiment is the same as the process of the inverse quantizer 106 in the video encoding apparatus of FIG. 1. That is, in the inverse quantizer 603, inverse quantization is performed on the transform coefficients 713 decoded by the entropy decoder 602, using the modulation quantization matrix 118 and the quantization parameter. Here, the example of the inverse quantization is as illustrated in the equation 15. Meanwhile, inverse quantization like the equation 16 taking into consideration a sign of the transform coefficients is also enabled. Inverse quantization like the equation 17 in which $Q_{step}$ is designed by a power-of-two to simplify an operation is also enabled. When operation precision is changed for every frequency component to suppress operation precision, the inverse quantization as illustrated in the equation 18 can be performed.

Meanwhile, similarly to the quantization matrix modulating unit 110 in the video encoding apparatus of FIG. 1, the quantization matrix modulating unit 610 is realized by the modulation matrix setting unit 201 and the modulation quantization matrix generating unit 202 as illustrated in FIG. 6. The modulation matrix setting unit 201 includes the switch 301 and the modulation matrix generating units 302, 303, and 304 as illustrated in FIG. 7. The modulation quantization matrix generating unit 202 is realized by using the arithmetic operator as illustrated in FIG. 10. The operations of the quantization matrix modulating unit 610 is the same as the operation of the quantization matrix modulating unit 110 in the video encoding apparatus of FIG. 1.

(Sixth Embodiment)

When the inverse quantizer 603 performs inverse quantization corresponding to the equation 18, instead of performing the modulation on the quantization matrix as in the fifth embodiment, the modulation may be performed on an operation precision control parameter to control operation precision at the time of inverse quantization. In this case, the equation 18 is transformed to the equation 27, and IMLS of the equation 27 is expressed by the equation 29.

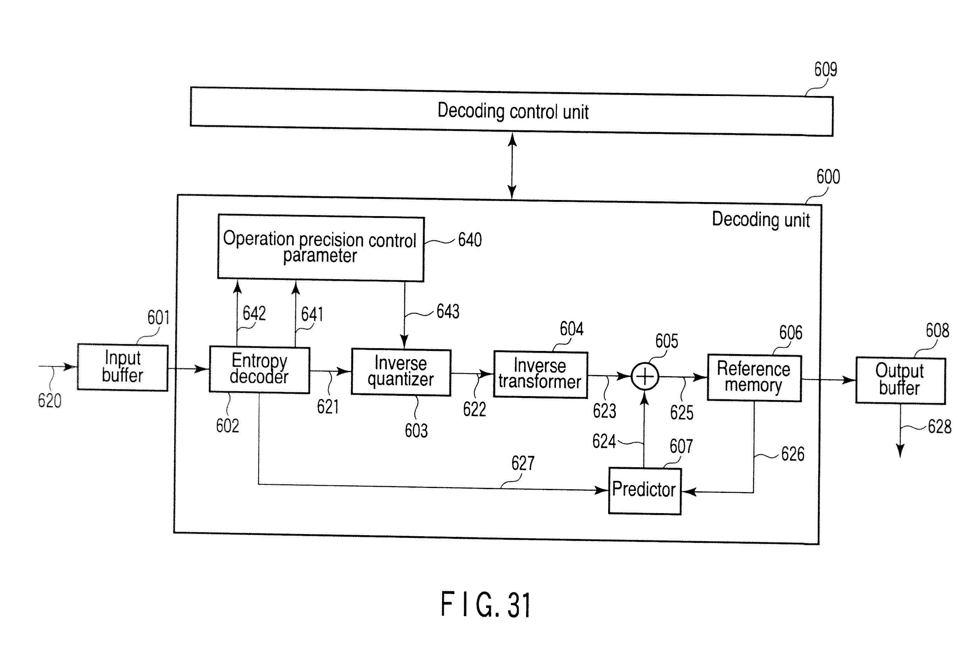

FIG. 31 illustrates a video decoding apparatus according to a sixth embodiment, which corresponds to the video encoding apparatus according to the second embodiment illustrated in FIG. 21. In the video decoding apparatus of FIG. 31, the quantization matrix modulating unit 610 in the video decoding apparatus according to the fifth embodiment illustrated in FIG. 30 is replaced by an operation precision control parameter modulating unit 640.

In the operation precision control parameter modulating unit 640, the operation precision control parameter 641 that corresponds to ILS of Equation 29 is provided from the decoding control unit 609, and the index (index indicating a modulation methods) 642 corresponding to idx of the equations 27 and 29 is provided from the entropy decoder 602. In the operation precision control parameter modulating unit 640, a modulation is performed on the operation precision control parameter 641 in accordance with the modulation method indicated by the index 642. Thereby, in the operation precision control parameter modulating unit 640, the modulated operation precision control parameter (called modulation control parameter) 643 corresponding to MILS of the equation 29 is generated. The modulation control parameter 643 is provided to the inverse quantizer 603. In the inverse quantizer 603, inverse quantization of the quantized transform coefficients 621 is performed in accordance with the modulation control parameter 643.

(Seventh Embodiment)

When the inverse quantizer 603 performs inverse quantization corresponding to the equation 16, instead of performing the modulation on the quantization matrix as in the fifth embodiment, the modulation may be performed on the quantization parameter. In this case, the equation 16 is transformed to the equation 31, and the modulation quantization parameter $QP_{step}$ of the equation 31 is expressed by the equation 32.

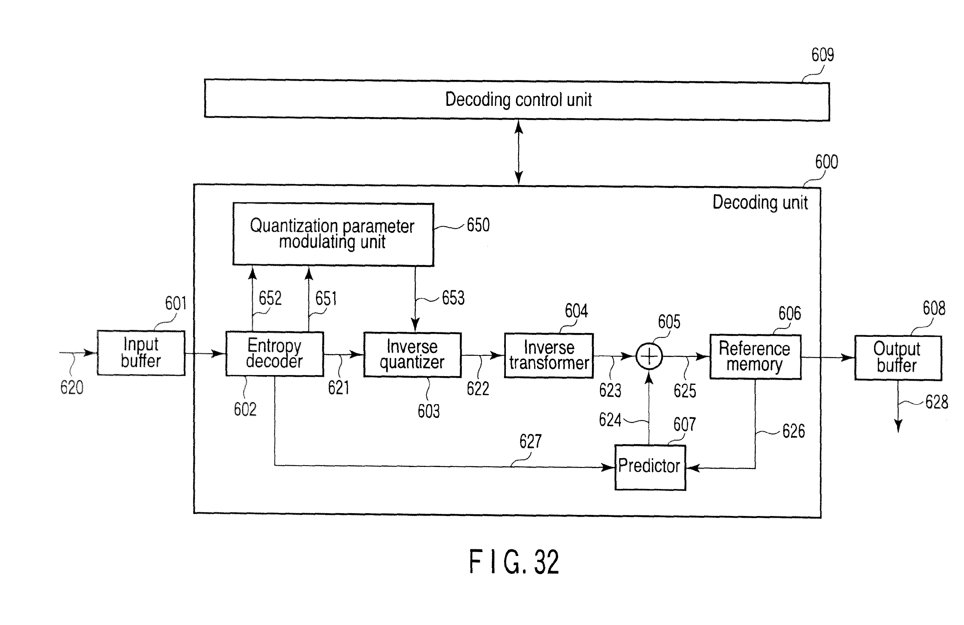

FIG. 32 illustrates a video decoding apparatus according to a seventh embodiment, which corresponds to the video encoding apparatus according to the third embodiment illustrated in FIG. 22. In the video decoding apparatus of FIG. 32, the quantization matrix modulating unit 610 in the video decoding apparatus according to the fifth embodiment illustrated in FIG. 30 is replaced by a quantization parameter modulating unit 650.

In the quantization parameter modulating unit 650, the quantization parameter 651 corresponding to $Q_{step}$ of the equation 32 is provided from the decoding control unit 609, and the index (index indicating a modulation method) 652 corresponding to idx of the equations 31 and 32 is provided from the entropy decoder 602. In the quantization parameter modulating unit 650, a modulation is performed on the quantization parameter 651 in accordance with the modulation method indicated by the index 652, and a modulation quantization parameter 653 corresponding to $QP_{step}$ of the equation 31 is generated. The modulation quantization parameter 653 is provided to the inverse quantizer 603. In the inverse quantizer 603, inverse quantization of the quantized transform coefficients 621 is performed in accordance with the modulation quantization parameter 653.

(Eighth Embodiment),

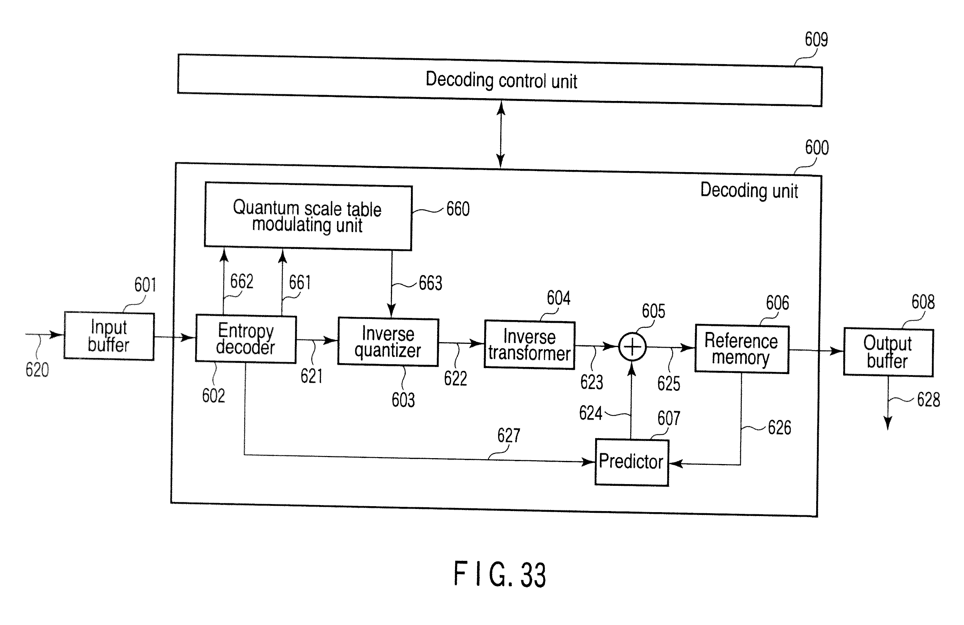

FIG. 33 illustrates a video decoding apparatus according to an eighth embodiment, which corresponds to the video encoding apparatus according to the fourth embodiment illustrated in FIG. 23. In the video decoding apparatus of FIG. 33, the quantization matrix modulating unit 610 in the video decoding apparatus according to the fifth embodiment illustrated in FIG. 30 is replaced by a quantum scale table modulating unit 660.

In the quantization scale table modulating unit 660, the quantization scale table 661 and the index 662 indicating the modulation method that are decoded by the entropy decoder 602 are provided. In the quantum scale table modulating unit 660, a modulation is performed on the quantization scale table 661 in accordance with the modulation method indicated by the index 662, and a modulated quantization scale table 663 is generated. The modulated quantization scale table 663 is provided to the inverse quantizer 603. In the inverse quantizer 603, inverse quantization of the quantized transform coefficients 621 is performed in accordance with the modulated quantization scale table 663.

Since the quantization scale table modulating unit 660 is the same as the quantization scale table modulating unit 160 according to the fourth embodiment, the repetitive description will be omitted. Further, since the syntax structure of the encoding data in this embodiment is the same as those described using FIGS. 13 and 25 to 29, the repetitive description will be omitted.

The video encoding apparatuses and the video decoding apparatuses according to the above-described embodiments can be realized by using a general-purpose computer device as basic hardware. In this case, the program is previously installed in the computer device or stored in a storage medium, such as a CD-ROM. Alternatively, the program may be distributed through a network, and the program may be appropriately installed in the computer device.

The present invention is not limited to the above-described embodiments, but in an embodiment stage, the constituent elements can be modified and specified without departing from the scope. Further, various inventions can be made by appropriately combining the plurality of constituent elements disclosed in the above-described embodiments. For example, some constituent elements may be removed from all the constituent elements disclosed in the embodiments. Further, the constituent elements according to the different embodiments may be appropriately combined.

Industrial Applicability

The present invention can be used in a technique for encoding/decoding a moving picture or a still image with high efficiency.

**Claims**

**1.** A video encoding method comprising:

> performing prediction for an input image signal to generate a prediction image signal;
> calculating a difference between the input image signal and the prediction image signal to generate a prediction residual signal;

transforming the prediction residual signal to generate a transform coefficient;
performing modulation on any one of (a) a quantization matrix, (b) a control parameter for controlling operation precision for quantization, (c) a quantization parameter indicating roughness of the quantization, and (d) a table in which a quantization scale is associated with the quantization parameter indicating roughness of the quantization, to obtain a modulation result related to the quantization;
quantizing the transform coefficient using the modulation result to generate a quantized transform coefficient; and
encoding the quantized transform coefficient and an index related to the modulation to generate encoding data.

2. A video encoding apparatus comprising:

a predictor to perform prediction for an input image signal to generate a prediction image signal;
a subtractor to calculate a difference between the input image signal and the prediction image signal to generate a prediction residual signal;
a transformer to transform the prediction residual signal to generate a transform coefficient;
a modulating unit to perform modulation on any one of (a) a quantization matrix, (b) a control parameter for controlling operation precision for quantization, (c) a quantization parameter indicating roughness of the quantization, and (d) a table in which a quantization scale is associated with the quantization parameter indicating roughness of the quantization, to obtain a modulation result related to the quantization;
a quantizer to quantize the transform coefficient using the modulation result to generate a quantized transform coefficient; and
an encoder to encode the quantized transform coefficient and an index related to the modulation to generate encoded data.

3. The video encoding apparatus according to claim 2, wherein the modulating unit is configured to perform the modulation using a modulation matrix having at least one of a logarithm model, an autocorrelation function model, a proportional/inversely proportional model, an N-order function ($N \geq 1$) model, a generalization Gauss function model including a Gauss distribution or a Laplace distribution, and a trigonometric function model.

4. The video encoding apparatus according to claim 2, wherein the modulating unit is configured to perform the modulation using at least one of addition, subtraction, multiplication, division, and bit shift between any one of the quantization matrix, the control parameter, the quantization parameter, and the table and a modulation matrix.

5. The video encoding apparatus according to claim 4, wherein the modulation matrix has at least one of a logarithm model, an autocorrelation function model, a proportional/inversely proportional model, an N-order function ($N \geq 1$) model, a generalization Gauss function model including a Gauss distribution or a Laplace distribution, and a trigonometric function model.

6. The video encoding apparatus according to claim 3, wherein the modulation matrix has a frequency component calculated using one of Minkowski distances including a town distance and a Euclidean distance.

7. The video encoding apparatus according to claim 4, wherein the modulation matrix has a frequency components that is calculated using one of Minkowski distances including a town distance and a Euclidean distance.

8. The video encoding apparatus according to claim 2, wherein the encoder is configured to add, to the encoder data, a flag indicating whether or not to perform the quantization by the quantizer using the modulation result for every encoding sequence, picture, encoding slice or block of the input image signal.

9. The video encoding apparatus according to claim 2, wherein the quantizer is configured to perform the quantization in units of a block having a different size.

10. The video encoding apparatus according to claim 2, wherein the index related to the modulation is an index indicating at least one of (a) a modulation method, (b) modulation strength, (c) a modulation matrix, (d) a modulation model, and (e) a number of a table on which the modulation method is described.

11. A video decoding method comprising:

decoding encoded data including a quantization transform coefficient and an index related to modulation;
performing modulation on any one of (a) a quantization matrix, (b) a control parameter for controlling operation precision for quantization, (c) a quantization parameter indicating roughness of the quantization, and (d) a table wherein a quantization scale is associated with the quantization parameter indicating roughness of the quantization in accordance with the index, to obtain a modulation result related to the quantization;

inversely quantizing the quantization transform coefficient using the modulation result to generate an inverse quantized transform coefficient;

performing inverse transform on the inverse quantized transform coefficient to generate a prediction residual signal;

performing prediction using a decoding image signal to generate a prediction image signal; and

adding the prediction image signal and the prediction residual signal to generate a decoded image signal.

12. A video decoding apparatus comprising:

a decoder to decode encoded data including a quantized transform coefficient and an index related to modulation;

a modulating unit which performs modulation on any one of (a) a quantization matrix, (b) a control parameter for controlling operation precision for quantization, (c) a quantization parameter indicating roughness of the quantization, and (d) a table in which a quantization scale is associated with the quantization parameter indicating roughness of the quantization in accordance with information related to the transform, to obtain a modulation result related to the quantization;

an inverse quantizer to inversely quantize the quantized transform coefficient using the modulation result to generate an inverse quantized transform coefficient;

an inverse transformer to perform inverse transform on the inverse quantized transform coefficient to generate a prediction residual signal;

a predictor to perform prediction using a decoding image signal to generate a prediction image signal; and

an adder to adds the prediction image signal and the prediction residual signal to generate a decoded image signal.

13. The video decoding apparatus according to claim 12, wherein the modulating unit is configured to perform the modulation using a modulation matrix having at least one of a logarithm model, an autocorrelation function model, a proportional/inversely proportional model, an N-order function (N ≥ 1) model, a generalization Gauss function model including a Gauss distribution or a Laplace distribution, and a trigonometric function model.

14. The video decoding apparatus according to claim 12, wherein the modulating unit is configured to perform the modulation using at least one of addition, subtraction, multiplication, division, and bit shift between any one of the quantization matrix, the control parameter, the quantization parameter, and the table and a modulation matrix.

15. The video decoding apparatus according to claim 13, wherein the modulation matrix has at least one of a logarithm model, an autocorrelation function model, a proportional/inversely proportional model, an N-order function (N ≥ 1) model, a generalization Gauss function model including a Gauss distribution or a Laplace distribution, and a trigonometric function model.

16. The video decoding apparatus according to claim 14, wherein the modulation matrix has a frequency component calculated using one of Minkowski distances including a town distance and a Euclidean distance.

17. The video decoding apparatus according to claim 15, wherein the modulation matrix has a frequency component calculated using one of Minkowski distances including a town distance and a Euclidean distance.

18. The video decoding apparatus according to claim 12, wherein the encoding data includes a flag indicating whether the quantization transform coefficient is quantized for every encoding sequence, picture, encoding slice or block in accordance with the modulation result related to the quantization obtained by performing the modulation on any one of (a) the quantization matrix, (b) the control parameter for controlling operation precision for quantization, (c) the quantization parameter indicating roughness of the quantization, and (d) the table in which the quantization scale is associated with the quantization parameter indicating roughness of the quantization, and the modulating unit is configured to perform the modulation in accordance with the flag.

19. The video decoding apparatus according to claim 12, wherein the inverse quantizer is configured to perform the inverse quantization in units of a block having a different size.

20. The video decoding apparatus according to claim 12, wherein the index related to the modulation is an index indicating at least one of (a) a modulation method, (b) modulation strength, (c) a modulation matrix, (d) a modulation model, and (e) a number of a table on which the modulation method is described.

**21.** A computer-readable storage medium to store commands of a computer program executed by a computer and causing operations of steps including:

performing prediction for an input image signal to generate a prediction image signal;

calculating a difference between the input image signal and the prediction image signal to generate a prediction residual signal;

transforming the prediction residual signal to generate a transform coefficient;

performing modulation on any one of (a) a quantization matrix, (b) a control parameter for controlling operation precision for quantization, (c) a quantization parameter indicating roughness of the quantization, and (d) a table in which a quantization scale is associated with the quantization parameter indicating roughness of the quantization, to obtain a modulation result related to the quantization;

quantizing the transform coefficient using the modulation result to generate a quantized transform coefficient; and

encoding the quantized transform coefficient and an index related to the modulation to generate encoded data.

**22.** A computer-readable storage medium to store commands of a computer program executed by a computer and causing operations of steps including:

decoding encoded data including a quantization transform coefficient and an index related to modulation;

performing modulation on any one of (a) a quantization matrix, (b) a control parameter for controlling operation precision for quantization, (c) a quantization parameter indicating roughness of the quantization, and (d) a table in which a quantization scale is associated with the quantization parameter indicating roughness of the quantization in accordance with information related to the transform, to obtain a modulation result related to the quantization;

inversely quantizing the quantized transform coefficient using the modulation result two generated an inverse quantized transform coefficient;

performing inverse transform on the inverse quantized transform coefficient to generate a prediction residual signal;

performing prediction using a decoded image signal to generate a prediction image signal; and

adding the prediction image signal and the prediction residual signal to generate a decoding image signal.

F I G. 1

Encoding frame

To-be-encoded block

Encoded block

F I G. 2

16 pixels

16 pixels

F I G. 3

4 pixels

4 pixels

F I G. 4A

8 pixels

8 pixels

F I G. 4B

| 4 | | | |
|---|---|---|---|
| (0,0) | (1,0) | (2,0) | (3,0) |
| (0,1) | (1,1) | (2,1) | (3,1) |
| (0,2) | (1,2) | (2,2) | (3,2) |
| (0,3) | (1,3) | (2,3) | (3,3) |

FIG. 5A

| 8 | | | | | | | |
|---|---|---|---|---|---|---|---|
| (0,0) | (1,0) | (2,0) | (3,0) | (4,0) | (5,0) | (6,0) | (7,0) |
| (0,1) | (1,1) | (2,1) | (3,1) | (4,1) | (5,1) | (6,1) | (7,1) |
| (0,2) | (1,2) | (2,2) | (3,2) | (4,2) | (5,2) | (6,2) | (7,2) |
| (0,3) | (1,3) | (2,3) | (3,3) | (4,3) | (5,3) | (6,3) | (7,3) |
| (0,4) | (1,4) | (2,4) | (3,4) | (4,4) | (5,4) | (6,4) | (7,4) |
| (0,5) | (1,5) | (2,5) | (3,5) | (4,5) | (5,5) | (6,5) | (7,5) |
| (0,6) | (1,6) | (2,6) | (3,6) | (4,6) | (5,6) | (6,6) | (7,6) |
| (0,7) | (1,7) | (2,7) | (3,7) | (4,7) | (5,7) | (6,7) | (7,7) |

FIG. 5B

FIG. 6

FIG. 7

FIG.8

FIG.9

Quantization matrix → Arithmetic operator (401) → Modulated quantization matrix

131

Modulation matrix

134

Modulated quantization matrix generating unit (202)

133

F I G. 10

16 pixels · Encoding slice

16 pixels

Slice quantization matrix

F I G. 11A

16 pixels   Encoding slice

16 pixels

☐ Block quantization matrix A     ▨ Block quantization matrix B

F I G. 11B

Block quantization matrix      Modulated quantization matrix

☐ + ▨ = ▨

Modulation matrix 1   Modulation matrix 2   Modulation matrix 3   Modulation matrix 4

F I G. 11C

16 pixels  Encoding slice

16 pixels

FIG. 11D

FIG.12

Syntax structure

501 High level syntax

504 Sequence parameter set syntax

505 Picture parameter set syntax

502 Slice level syntax

506 Slice header syntax

507 Slice data syntax

503 Macroblock level syntax

508 Macroblock header syntax

509 Macroblock data syntax

F I G. 13

```
seq_parameter_set( ) {

    ...

    seq_moduletaed_quantization_matrix_flag

    ...

}
```

F I G. 14

```
pic_parameter_set( ) {

    ...

    pic_moduletaed_quantization_matrix_flag

    ...

}
```

F I G. 15

```
slice_header_set( ) {

    ...

  slice_moduletaed_quantization_matrix_flag

    ...

}
```

F I G. 16

```
macroblock_header( ) {

   ...

       if(CurrentModulatedQuantizationMatrixFlag ){

   ...       if(coded_block_pattern != 0 && mode != skip )

                  modulation_index

       }

   ...

}
```

F I G. 17

```
macroblock_header( ) {

   ...

       if(CurrentModulatedQuantizationMatrixFlag ){

   ...       if(coded_block_pattern != 0 && mode != skip )

                  modulation_strength

       }

   ...

}
```

F I G. 18

```
slice_header_set( ) {

    ...

        slice_moduletaed_quantization_matrix_flag

        if(slice_moduletaed_quantization_matrix_flag ){

            slice_modulation_length

            slice_modulation_model

            slice_modulation_type

        }

    ...

}
```

F I G. 19

| Syntax element | 0 | 1 | 2 | 3 | 4 | 5 |
|---|---|---|---|---|---|---|
| slice_modulation_length | N=1 | N=2 | N=4 | N=8 | N=16 | N=32 |
| slice_modulation_model | Equation (23) | Equation (24) | Logarithm model | Gauss model | Proportional model | Rectangular model |
| slice_modulation_type | Addition | Subtraction | Multiplication | Division | Bit shift | Differentiation |

F I G. 20

F I G. 21

EP 2 136 566 A1

F I G. 22

Encoding control unit — 113

100

Encoding unit

Quantization parameter modulating unit — 150

151

153

152

101

122

120

121

102

Transformer — 104

Quantizer — 105

Entropy encoder — 111

Output buffer — 112

130

Mode determining unit — 103

123

124

124

129

Predictor — 102

Reference memory — 109

108

Inverse transformer — 107

Inverse quantizer — 106

128

127    126    125

F I G. 23

(a) Tidx=0

QP-3    QP-2    QP-1    QP    QP+1    QP+2    QP+3

$\Delta$

(b) Tidx=1

QP-2    QP-1    QP    QP+1    QP+2

$2\Delta$

(c) Tidx=2

QP-1    QP+1

QP-4    QP-3    QP-2    QP    QP+2    QP+3    QP+4

$\Delta/2$

(d) Tidx=3

QP-3    QP-1    QP+1    QP+3

QP-5    QP-4    Q-3    QP    QP+2    QP+4    QP+5

F I G. 24

```
seq_parameter_set( ) {

    ...

    seq_moduletaed_quantization_precision_flag

    ...

}
```

F I G. 25

```
pic_parameter_set( ) {

    ...

    pic_moduletaed_quantization_precision_flag

    ...

}
```

F I G. 26

```
slice_header_set( ) {

    ...

    slice_moduletaed_quantization_precision_flag

    ...

}
```

F I G. 27

```
macroblock_header_( ) {

    ...


        if(CurrentModulatedQuantizationPrecisionFlag ){

            if(coded_block_pattern != 0 && mode != skip &&

mb_qp_delta != 0 )

                    precision_modulation_index

        }

      ...

}
```

F I G. 28

```
slice_headter_set( ) {

    ...

        if(Curren    tModulatedQuantizationPrecisionFlag){

            slice_precision_modulation_index

        }

    ...

}
```

F I G. 29

F I G. 30

EP 2 136 566 A1

F I G. 31

EP 2 136 566 A1

Decoding control unit — 609

Decoding unit — 600

Quantization parameter modulating unit — 650

652  651

653

Input buffer — 601

620

Entropy decoder — 602

621

Inverse quantizer — 603

622

Inverse transformer — 604

623

⊕ — 605

624  625

Reference memory — 606

626

Output buffer — 608

628

Predictor — 607

627

F I G. 32

EP 2 136 566 A1

609

Decoding control unit

600

Decoding unit

660
Quantum scale table
modulating unit

601
Input
buffer

620

662    661

663

602
Entropy
decoder

621

603

622
Inverse
quantizer

604
Inverse
transformer

623

605

624

625

606
Reference
memory

626

608
Output
buffer

628

627

607
Predictor

F I G. 33

<div align="center">**INTERNATIONAL SEARCH REPORT**</div>

| | International application No. |
|---|---|
| | PCT/JP2008/055012 |

A. CLASSIFICATION OF SUBJECT MATTER
*H04N7/50*(2006.01)i

According to International Patent Classification (IPC) or to both national classification and IPC

B. FIELDS SEARCHED

Minimum documentation searched (classification system followed by classification symbols)
H04N7/24-7/68

Documentation searched other than minimum documentation to the extent that such documents are included in the fields searched

| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2003-189308 A (Victor Company Of Japan, Ltd.), 04 July, 2003 (04.07.03), Par. Nos. [0008] to [0052]; Fig. 2 (Family: none) | 1-22 |
| X | JP 2003-230142 A (Sony Corp.), 15 August, 2003 (15.08.03), Par. Nos. [0077] to [0156] & US 2003/0147463 A1 | 1-22 |
| X | JP 2001-292450 A (Sony Corp.), 19 October, 2001 (19.10.01), Par. Nos. [0141] to [0191], [0270] (Family: none) | 1-22 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10 June, 2008 (10.06.08) | 24 June, 2008 (24.06.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

| International application No. |
| --- |
| PCT/JP2008/055012 |

C (Continuation).  DOCUMENTS CONSIDERED TO BE RELEVANT

| Category* | Citation of document, with indication, where appropriate, of the relevant passages | Relevant to claim No. |
| --- | --- | --- |
| A | Jungwoo Lee, Rate-distortion optimization of parametrized quantization matrix for MPEG-2 encoding, IEEE International Conference on Image Processing, ICIP 98, 1998.10.04, Vol. 2, p.383-386 | 3,5,13,15 |

Form PCT/ISA/210 (continuation of second sheet) (April 2007)

**INTERNATIONAL SEARCH REPORT**

| International application No. |
| --- |
| PCT/JP2008/055012 |

---

**Box No. II**  **Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

---

**Box No. III**  **Observations where unity of invention is lacking (Continuation of item 3 of first sheet)**

This International Searching Authority found multiple inventions in this international application, as follows:
   This international application (claims 1-22) includes following four groups of inventions which do not satisfy the requirement of unity of invention.
   [a] Inventions which modulate the quantization matrix (first group of inventions), [b] inventions which modulate a control parameter which controls the calculation accuracy for quantization (second group of inventions), [c] inventions which modulate a quantization parameter expressing the quantization roughness (third group of inventions), and [d] inventions which modulate a table containing the quantization parameter expressing the quantization roughness correlated to a quantization scale (fourth group of inventions).
   (Continued to extra sheet)

1. ☒ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**

the

☐ The additional search fees were accompanied by the applicant's protest and, where applicable, payment of a protest fee.

☐ The additional search fees were accompanied by the applicant's protest but the applicable protest fee was not paid within the time limit specified in the invitation.

Form PCT/ISA/210 (continuation of first sheet (2)) (April 2007)

**INTERNATIONAL SEARCH REPORT**

International application No.

PCT/JP2008/055012

Continuation of Box No.III of continuation of first sheet(2)

The technical feature common to the four groups of inventions cannot be a special technical feature since it is disclosed in Document JP 2003-189308 A (Victor Company Of Japan, Ltd.), 04 July, 2003 (04.07.03), paragraphs [0008]-[0052] (especially, paragraphs [0033], [0044]), Fig. 2.

Form PCT/ISA/210 (extra sheet) (April 2007)

**EP 2 136 566 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006262004 A

- JP 2003189308 A

**Non-patent literature cited in the description**

- **J. Lu.** proposal of quantization weighting for H.264/MPEG-4 AVC Professional Profiles. *JVT of ISO/IEC MPEG & ITU-T VCEG, JVT-K 029,* March 2004